# EUROPEAN PATENT APPLICATION

(11) **EP 4 782 119 A1**
(43) Date of publication of application: **29.07.2026**
(21) Application number: 24885244.4
(22) Date of filing: 09.08.2024
(51) Int. Cl.: B09B 5/00, B09B 3/70, B09B 101/67

(54) **RECYCLING SYSTEM COMPRISING RESOURCE TREATMENT FACILITY AND USED ABSORBENT ARTICLE RECYCLING FACILITY AND USED ABSORBENT ARTICLE RECYCLING METHOD USING SAME**

(30) Priority: 02.11.2023 JP 2023188911
(71) Applicant: Unicharm Corporation, Shikokuchuo-shi, Ehime 799-0111 (JP)
(72) Inventor: KONISHI, Takayoshi, Kanonji-shi, Kagawa 769-1602 (JP); KURITA, Noritomo, Kanonji-shi, Kagawa 769-1602 (JP)
(74) Representative: Staeger & Sperling Partnerschaftsgesellschaft mbB
(86) International application number: PCT/JP2024/028713
(87) International publication number: WO 2025/094467

(57) **Abstract**

Provided is a recycling method that uses a recycling system that comprises a resource treatment facility and a used absorbent article recycling facility, the method making it possible to further improve treatment efficiency. This recycling method is a used absorbent article recycling method that uses a recycling system (A) that comprises a resource treatment facility (2) and a used absorbent article recycling facility (1). The recycling method includes a dehydration washing step (S12) for dehydrating and washing used absorbent articles with a treatment liquid that includes a dehydrating agent at a recycling facility, a separation step (S13) for separating the treatment liquid from the constituent components of the used absorbent articles at the recycling facility, a treatment liquid usage step (S24) for using a portion of the treatment liquid separated at the separation step at a resource treatment facility, and a waste heat usage step (S14) for using a portion of the waste heat generated at the resource treatment facility at the recycling facility.

## Description

### FIELD

The present invention relates to a recycling system comprising a resource conversion treatment facility and a recycling facility for used absorbent articles and a recycling method of used absorbent articles using the same.

### BACKGROUND

Technologies are known for reusing, in a resource conversion treatment facility such as an incineration facility, materials produced in a recycling facility for used absorbent articles. For example, Patent Literature 1 discloses a used disposable diaper recycling system. This recycling system comprises at least a treatment device for producing, from used disposable diapers serving as raw materials, recycled material that contains a predetermined water content and has a volume reduced to a predetermined level, and recycling equipment for re-utilizing the used disposable diapers by combusting the recycled material as a fuel and recovering thermal energy. The recycling equipment may be combustion equipment that is co-located with the treatment device in the same facility and that combusts the recycled material as a fuel as it is.

### [CITATION LIST]

### [PATENT LITERATURE]

[PTL 1] WO 2006/134941 A

### SUMMARY

### [TECHNICAL PROBLEM]

In Patent Literature 1, reduced-volume disposable diapers are produced in a recycling facility and incinerated in an incineration facility, which is a type of resource conversion treatment facility. However, from the perspective of reducing environmental impact and ensuring sustainable consumption and production patterns, it is preferable for the recycling facility to recycle the pulp fiber, superabsorbent polymer, plastic material, etc., of disposable diapers as materials, rather than recycling disposable diapers as a fuel.

In this case, the recycling facility produces waste such as used treatment liquid (which may comprise excrement), exhaust gas, and wastewater, which may reduce the treatment efficiency of the recycling facility. Conversely, the resource conversion treatment facility, such as an incineration facility, has the potential to effectively utilize products from the recycling facility, in addition to incinerating disposable diapers.

Thus, an object of the present invention is to provide a recycling system comprising a resource conversion treatment facility and a recycling facility for used absorbent articles which enables further increases in treatment efficiency, and a recycling method using the same.

### [SOLUTION TO PROBLEM]

The present invention provides a recycling method of used absorbent articles using a recycling system comprising a resource conversion treatment facility and a recycling facility for used absorbent articles, the method comprising: in the recycling facility, a dehydration and washing step of dehydrating and washing a used absorbent article with a treatment liquid comprising a dehydrating agent; in the recycling facility, a separation step of separating a constituent member of the used absorbent article from the treatment liquid; in the resource conversion treatment facility, a treatment liquid utilization step of utilizing a part of the treatment liquid separated in the separation step; and in the recycling facility, a waste heat utilization step of utilizing a part of waste heat generated by the resource conversion treatment facility.

### [ADVANTAGEOUS EFFECTS OF INVENTION]

According to the present invention, there can be provided a recycling system comprising a resource conversion treatment facility and a recycling facility for used absorbent articles which enables further increases in treatment efficiency, and a recycling method using the same .

### BRIEF DESCRIPTION OF DRAWINGS

FIG. 1 is a block diagram showing an example of a configuration of a recycling system according to a first embodiment.
FIG. 2 is a flow chart showing an example of a recycling method using the recycling system according to the first embodiment.
FIG. 3 is a block diagram showing an example of a configuration of a recycling system according to a second embodiment.
FIG. 4 is a flow chart showing an example of a recycling method using the recycling system according to the second embodiment.

### DESCRIPTION OF EMBODIMENTS

The present embodiment relates to the following aspects.

[Aspect 1] A recycling method of used absorbent articles using a recycling system comprising a resource conversion treatment facility and a recycling facility for used absorbent articles, the method comprising: in the recycling facility, a dehydration and washing step of dehydrating and washing a used absorbent article with a treatment liquid comprising a dehydrating agent; in the recycling facility, a separation step of separating a constituent member of the used absorbent article from the treatment liquid; in the resource conversion treatment facility, a treatment liquid utilization step of utilizing a part of the treatment liquid separated in the separation step; and in the recycling facility, a waste heat utilization step of utilizing a part of waste heat generated by the resource conversion treatment facility.

In the present recycling method, by effectively utilizing, in the resource conversion treatment facility, a part of the waste generated by the recycling facility, such as used treatment liquid (which may comprise excrement), waste disposal treatment steps and equipment required by the recycling facility can be reduced. In addition, by effectively utilizing, in the recycling facility, a part of the waste heat generated by the resource conversion treatment facility, at least a part of the thermal energy required by the recycling facility can be covered, whereby thermal energy supply steps and equipment can be reduced. As a result, the present recycling method enables further increases in treatment efficiency in both the recycling facility and the resource conversion treatment facility.

The resource conversion treatment facility is a facility for converting waste, biomass resources, etc., into resources. Conversion of waste, biomass resources, etc., into resources means converting waste, biomass resources, etc., into a state in which they can be reused. Examples of such resource conversion treatment include using waste, biomass resources, etc., as raw materials or fuel, manufacturing materials or fuel (including gas) from waste, biomass resources, etc., and producing energy (including heat and electricity) from waste, biomass resources, etc. Examples of the resource conversion treatment facility include an incineration facility for waste, etc., and a methane fermentation facility for biomass resources, etc.

[Aspect 2] The recycling method according to Aspect 1, wherein the treatment liquid further comprises an oxidizing agent.

In the present recycling method, by effectively utilizing, in the resource conversion treatment facility, the used treatment liquid comprising dehydrating and oxidizing agents generated by the recycling facility, steps and equipment required for the disposal treatment of dehydrating and oxidizing agents in the recycling facility can be reduced. In addition, by effectively utilizing, in the recycling facility, a part of the waste heat, etc., generated by utilizing the used dehydrating and oxidizing agents, a part of the thermal energy required by the recycling facility can be covered, whereby the thermal energy supply steps and equipment can be reduced. As a result, the present recycling method enables further increases in treatment efficiency in both the recycling facility and the resource conversion treatment facility.

[Aspect 3] The recycling method according to Aspect 1 or 2, wherein the treatment liquid in the dehydration and washing step comprises an organic solvent as the dehydrating agent; the waste heat utilization step comprises a distillation step of using a part of the waste heat from the resource conversion treatment facility in distillation of the organic solvent included in the treatment liquid separated in the separation step; and the recycling method further comprises a solvent supply step of supplying the organic solvent distilled in the distillation step to the dehydration and washing step.

In the present recycling method, the used organic solvent, which is one of the waste products generated in the separation step, is distilled in the distillation step using a part of the waste heat from the resource conversion treatment facility and then supplied to the dehydration and washing step in the solvent supply step for reusing. In this manner, by using the organic solvent as part or all of the treatment liquid, treating used absorbent articles with the organic solvent at an appropriate location, and distilling and reusing the used organic solvent, the amount of waste liquid (treatment liquid) discharged during the recycling step can be reduced (as compared to treatment of used absorbent articles with an aqueous solution). If the amount of waste liquid is large, it may not be possible to completely treat the waste liquid in the resource conversion treatment facility, and thus it may be necessary to provide a waste liquid disposal treatment step. However, as described above, the present recycling method produces a small amount of waste liquid. As a result, the steps and equipment required for organic solvent waste disposal treatment in the recycling facility can be reduced, whereby the amount of organic solvent used can be reduced. In addition, at least a part of the thermal energy required for the distillation step in the recycling facility can be covered by waste heat, whereby thermal energy supply steps and equipment can be reduced. As a result, the present recycling method enables further increases in treatment efficiency in both the recycling facility and the resource conversion treatment facility.

[Aspect 4] The recycling method according to any one of Aspects 1 to 3, further comprising, in the recycling facility, before the dehydration and washing step, a pretreatment step of reducing moisture absorbed by the used absorbent article with a pretreatment liquid; and in the resource conversion treatment facility, a cooling step of using the pretreatment liquid used in the pretreatment step, as cooling water.

In the present recycling method, the used absorbent article is dehydrated using a pretreatment liquid in the pretreatment step, whereby the dehydration load in the dehydration and washing step can be reduced; and the used pretreatment liquid, which is one of the waste products generated in the pretreatment step, is used in the cooling step as cooling water for the resource conversion treatment facility. As a result, waste disposal treatment steps and equipment required for the pretreatment liquid in the recycling facility can be reduced. In addition, at least a part of the cooling water required by the resource conversion treatment facility can be covered by the pretreatment liquid, whereby cooling steps and equipment required for the cooling water can be reduced. As a result, the present recycling method enables further increases in treatment efficiency in both the recycling facility and the resource conversion treatment facility.

[Aspect 5] The recycling method according to any one of Aspects 1 to 4, further comprising, in the recycling facility, before the dehydration and washing step, a pretreatment step of reducing moisture absorbed by the used absorbent article by heating and evaporation, wherein the pretreatment step comprises a step of using a part of the waste heat from the resource conversion treatment facility to heat the moisture, as the waste heat utilization step.

In the present recycling method, before the dehydration and washing step, the moisture absorbed by the used absorbent article is reduced, i.e., removed, by heating and evaporation (pretreatment step). As a result, the dehydration burden in the dehydration and washing step can be reduced. Furthermore, at that time, a part of the waste heat from the resource conversion treatment facility is used to heat the moisture (waste heat utilization step). As a result, at least a part of the thermal energy required for the pretreatment step in the recycling facility can be covered by waste heat, reducing thermal energy supply steps and equipment. Thus, the present recycling method enables further increases in treatment efficiency in both the recycling facility and the resource conversion treatment facility.

[Aspect 6] The recycling method according to any one of Aspects 1 to 5, wherein the treatment liquid utilization step comprises a methane fermentation step of performing methane fermentation using excrement included in a part of the treatment liquid separated in the separation step.

In the present recycling method, the treatment liquid utilization step in the resource conversion treatment facility comprises a methane fermentation step of performing methane fermentation using excrement included in a part of the treatment liquid separated in the separation step in the recycling facility. As a result, at least a part of the biomass resources required by the methane fermentation facility can be covered by the excrement, whereby biomass resources supply steps and equipment can be reduced. Thus, the present recycling method enables further increases in treatment efficiency in both the recycling facility and the resource conversion treatment facility.

[Aspect 7] The recycling method according to Aspect 6, wherein in the waste heat utilization step, waste heat generated in the methane fermentation step is included as part of the waste heat generated by the resource conversion treatment facility.

In the present recycling method, a part of the waste heat generated by the resource conversion treatment facility that is used in the waste heat utilization step in the recycling facility includes the waste heat generated in the methane fermentation step in the resource conversion treatment facility. As a result, thermal energy supply steps and equipment required for the waste heat utilization step in the recycling facility can be reduced. Thus, the present recycling method enables further increases in the treatment efficiency of both the recycling facility and the resource conversion treatment facility.

[Aspect 8] The recycling method according to Aspect 2, wherein the dehydration and washing step comprises an application step of applying an ozone-containing gas as the oxidizing agent to the treatment liquid, and the recycling method further comprises a gas treatment step of treating, in the resource conversion treatment facility, the ozone-containing gas used in the dehydration and washing step.

In the present recycling method, the used absorbent article is dehydrated and washed with a treatment liquid comprising ozone-containing gas in the dehydration and washing step to make it easier to utilize excrement in the resource conversion treatment facility, and the used ozone-containing gas, which is one of the waste products generated in the dehydration and washing step, is treated in the resource conversion treatment facility. As a result, steps and equipment required for the disposal treatment of the used ozone-containing gas in the recycling facility can be reduced. Thus, the present recycling method enables further increases in treatment efficiency in both the recycling facility and the resource conversion treatment facility.

[Aspect 9] The method according to any one of Aspects 1 to 8, further comprising, in the resource conversion treatment facility, an odor treatment step of treating, in the resource conversion treatment facility, odor generated in the dehydration and washing step.

In the present recycling method, odors, which are one of the waste products generated in the dehydration and washing step, are treated in the resource conversion treatment facility. As a result, odor disposal treatment steps and equipment required by the recycling facility can be reduced. Thus, the present recycling method enables further increases in treatment efficiency in both the recycling facility and the resource conversion treatment facility.

[Aspect 10] The method according to any one of Aspects 1 to 9, wherein the waste heat utilization step comprises a drying step of using a part of the waste heat from the resource conversion treatment facility is used to dry the constituent member separated in the separation step.

In the present recycling method, at least a part of the thermal energy required for drying the constituent member in the drying step can be covered by waste heat, whereby supply steps and equipment required for the thermal energy used for drying can be reduced. Thus, the present recycling method enables further increases in treatment efficiency in both the recycling facility and the resource conversion treatment facility.

[Aspect 11] A recycling method of used absorbent articles using a recycling facility for used absorbent articles, the method comprising: a dehydration and washing step of dehydrating and washing a used absorbent article with a treatment liquid comprising a dehydrating agent; a separation step of separating a constituent member of the used absorbent article from the treatment liquid; a treatment liquid supply step of supplying a part of the treatment liquid separated in the separation step to a combustible waste resource conversion treatment facility; and a waste heat utilization step of utilizing, in the recycling facility, a part of waste heat generated by the resource conversion treatment facility.

In the present recycling method, a part of the waste generated in the recycling facility, such as the used treatment liquid (which may comprise excrement), is supplied to the resource conversion treatment facility, whereby waste disposal treatment steps and equipment required by the recycling facility can be reduced. In addition, by effectively utilizing, in the recycling facility, a part of the waste heat generated by the resource conversion treatment facility, at least a part of the thermal energy required by the recycling facility can be covered, whereby thermal energy supply steps and equipment can be reduced. As a result, the present recycling method enables further increases in treatment efficiency in both the recycling facility and the resource conversion treatment facility.

[Aspect 12] A recycling system comprising a resource conversion treatment facility and a recycling facility for used absorbent articles, wherein the recycling facility comprises: a dehydration and washing portion of dehydrating and washing a used absorbent article with a treatment liquid comprising a dehydrating agent, and a separation portion of separating a constituent member of the used absorbent article from the treatment liquid; the resource conversion treatment facility comprises a treatment liquid utilization portion of utilizing a part of the treatment liquid separated by the separation portion; and the recycling facility comprises a waste heat utilization portion of utilizing a part of waste heat generated by the resource conversion treatment facility.

In the present recycling system, by effectively utilizing, in the resource conversion treatment facility, a part of waste generated by the recycling facility, such as used treatment liquid (which may comprise excrement), waste disposal treatment steps and equipment required by the recycling facility can be reduced. In addition, by effectively utilizing, in the recycling facility, a part of the waste heat generated by the resource conversion treatment facility, at least a part of the thermal energy required by the recycling facility can be covered, whereby thermal energy supply steps and equipment can be reduced. As a result, the present recycling method enables further increases in treatment efficiency in both the recycling facility and the resource conversion treatment facility.

[Aspect 13] A recycling system comprising a recycling facility for used absorbent articles, wherein the recycling facility comprises: a dehydration and washing portion of dehydrating and washing a used absorbent article with a treatment liquid comprising a dehydrating agent; a separation portion of separating a constituent member of the used absorbent article from the treatment liquid; a treatment liquid supply portion of supplying a part of the treatment liquid separated by the separation portion to a combustible waste resource conversion treatment facility; and a waste heat utilization portion of utilizing, in the recycling facility, a part of waste heat generated by the resource conversion treatment facility.

In the present recycling system, by supplying a part of the waste generated by the recycling facility, such as used treatment liquid (which may comprise excrement), to the resource conversion treatment facility, waste disposal treatment steps and equipment required by the recycling facility can be reduced. In addition, by effectively utilizing, in the recycling facility, a part of the waste heat generated by the resource conversion treatment facility, at least a part of the thermal energy required by the recycling facility can be covered, whereby thermal energy supply steps and equipment can be reduced. As a result, the present recycling method enables further increases in treatment efficiency in both the recycling facility and the resource conversion treatment facility.

A recycling system comprising a resource conversion treatment facility and a recycling facility for used absorbent articles and a recycling method of used absorbent articles using the same according to embodiments will be described below.

### (First Embodiment)

The used absorbent articles include absorbent articles that have been used, for example, those comprising or not comprising excrement, as well as unused but discarded absorbent articles, for example, those that were transferred but unused and those that were produced or stored but then discarded (factory loss, storage loss, etc.). Absorbent articles include those comprising a superabsorbent polymer and a pulp fiber as absorbent materials, such as disposable diapers, urine absorption pads, sanitary napkins, bed sheets, and pet sheets. Recycled superabsorbent polymer refers to a superabsorbent polymer which is derived from a used absorbent article and which has been collected and regenerated from a used absorbent article. Recycled pulp fiber refers to a pulp fiber which is derived from a used absorbent article and which has been collected and regenerated from a used absorbent article. Used absorbent articles contain contaminants. Examples of the contaminants comprise excrement, sebum, bacteria, odorous substances, and colored substances derived therefrom, machine oil from production equipment, and various organic substances.

An example of the configuration of an absorbent article will be described. The absorbent article comprises a top sheet, a back sheet, and an absorbent body disposed between the top sheet and the back sheet. An example of the size of the absorbent article is a length of approximately 15 to 100 cm and a width of 5 to 100 cm. The absorbent article may further comprise other members that are commonly provided in absorbent articles, such as a diffusion sheet, leak-proof walls, side sheets, or an exterior sheet.

The material of the top sheet is not particularly limited as long as it can be used in an absorbent article, and examples thereof include liquid-permeable nonwoven fabrics, synthetic resin films having liquid-permeable holes, and composite sheets thereof. The material of the back sheet is not particularly limited as long as it can be used in an absorbent article, and examples thereof include liquid-impermeable nonwoven fabrics, liquid-impermeable synthetic resin films, and composite sheets thereof. The material of the diffusion sheet is not particularly limited as long as it can be used in an absorbent article, and examples thereof include liquid-permeable nonwoven fabrics. The materials of the leak-proof walls, side sheets, and exterior sheets are not particularly limited as long as they can be used in an absorbent article, and examples thereof include liquid-impermeable nonwoven fabrics. The materials of the nonwoven fabric and synthetic resin film are not particularly limited as long as they can be used in an absorbent article, and examples thereof include synthetic resins. Examples of synthetic resins include olefin-based resins such as polyethylene and polypropylene, polyamide-based resins such as 6-nylon and 6,6-nylon, and polyester-based resins such as polyethylene terephthalate (PET) and polybutylene terephthalate (PBT). Natural fibers such as cotton and rayon may be used as a material for the nonwoven fabric. In the present embodiment, at least the nonwoven fabric and the synthetic resin described above film are referred to as plastic materials.

Examples of the material of the absorbent body include absorbent materials, and specifically, pulp fibers and superabsorbent polymers. The pulp fiber is not particularly limited as long as it can be used in an absorbent article, and examples thereof include cellulosic fibers. Examples of cellulosic fibers include wood pulp, crosslinked pulp, non-wood pulp, regenerated cellulose, and semi-synthetic cellulose. Examples of the size of the pulp fiber include an average value of the major diameter of the fiber of several tens of µm, and 20 to 40 µm is preferable, as well as an average fiber length of several mm, and 2 to 5 mm is preferable. The superabsorbent polymer (SAP) is not particularly limited as long as it can be used in an absorbent article and has an acid group, and examples thereof include those comprising a carboxyl group, a sulfo group, etc., and those comprising a carboxyl group are preferable. Examples thereof include polyacrylate-based absorbent polymers (comprising a carboxyl group), polysulfonate-based absorbent polymers (comprising a sulfo group, etc.), and polymaleic anhydride-based absorbent polymers (comprising a carboxyl group). The size of the superabsorbent polymer (when dry) can be, for example, an average particle size of several hundred µm, with 200 to 500 µm being preferable. The absorbent body may comprise a core wrap sheet which is formed from a liquid-permeable sheet such as tissue, for encapsulating the absorbent material.

One side of the absorbent body is bonded to the top sheet and the other side to the back sheet, each via an adhesive. In a plan view, the portion of the top sheet (peripheral portion) extending outward from the absorbent body so as to surround the absorbent body is bonded via an adhesive to the portion of the back sheet (peripheral portion) extending outward from the absorbent body so as to surround the absorbent body. Thus, the absorbent body is enclosed within the bonded body of the top sheet and back sheet. When the absorbent body comprises a core wrap sheet, the absorbent material is bonded to the core wrap sheet via an adhesive. The diffusion sheet, leak-proof walls, side sheets, and exterior sheet are also each bonded to other constituent members via an adhesive. The adhesive is not particularly limited as long as it can be used in an absorbent article, and examples thereof include hot-melt adhesives. Examples of hot-melt adhesives include pressure-sensitive adhesives or heat-sensitive adhesives based on rubbers such as styrene-ethylene-butadiene-styrene, styrene-butadiene-styrene, and styreneisoprene-styrene, or based on olefins such as polyethylene.

As described above, an absorbent article having the configuration described above contains some or all of the contaminants described above at the stage of a used absorbent article.

Next, the recycling system comprising a resource conversion treatment facility and a recycling facility for used absorbent articles according to the present embodiment, and a recycling method using the same will be described. In the present embodiment, a waste incineration facility will be described as an example of the resource conversion treatment facility.

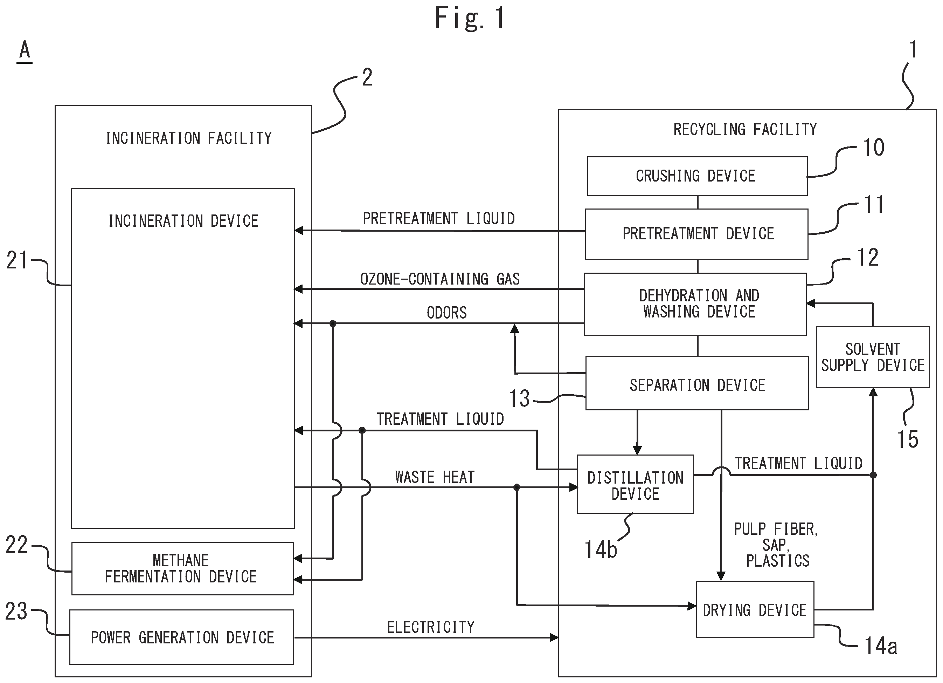

FIG. 1 is a block diagram showing an example of the configuration of the recycling system A according to the present embodiment. The recycling system A comprises a recycling facility 1 for used absorbent articles and an incineration facility 2 (resource conversion treatment facility) for waste. The recycling facility 1 and the incineration facility 2 may be integrated, adjacent, or co-located. Both facilities may be located on the same site or on separate sites. The recycling facility 1 separates and collects a part or all of the constituent members of used absorbent articles so that they can be reused as materials for various products (including absorbent articles). The incineration facility 2 incinerates waste such as garbage, and is exemplified by a garbage incineration plant (garbage treatment plant). The incineration facility 2 may comprise a device for utilizing the thermal energy generated by incineration. By treating, in the incineration facility 2, waste generated by the recycling facility 1 (for example, waste liquid and exhaust gas) and utilizing, in the recycling facility 1, the energy generated by the incineration facility 2 (for example, heat and electricity), the treatment efficiency of both facilities can be further increased.

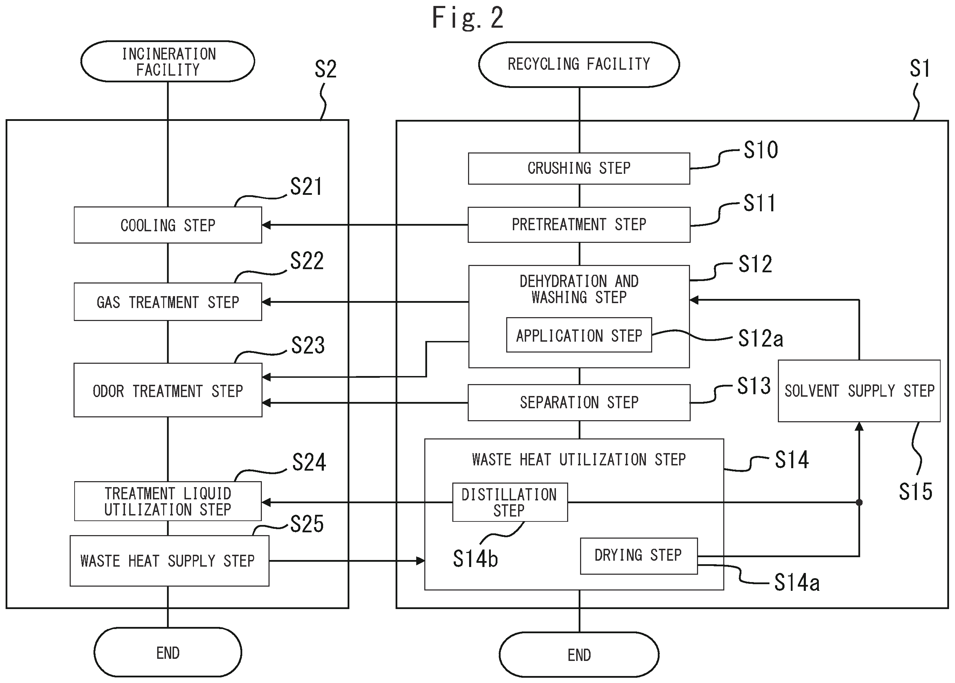

FIG. 2 is a flow diagram showing an example of the recycling method using the recycling system A according to the present embodiment. The recycling method comprises step S1 of treating a used absorbent article, which is performed in the recycling facility 1, and step S2 of treating waste, which is performed in the incineration facility 2. Step S1 is for separating and collecting a part or all of the constituent members of the used absorbent articles so that they can be reused as materials for various products (including absorbent articles). Step S2 is for incinerating the waste and may comprise utilizing the generated thermal energy. By treating, in step S2, the waste generated in step S1 and utilizing, in step S1, the energy (for example, heat and electricity) generated in step S2, the treatment efficiency of both facilities can be further increased.

The recycling system A and the recycling method using the same will be described below.

First, step S1 of the recycling method, which is performed in the recycling facility 1, will be described. Step S1 comprises a dehydration and washing step S12 and a separation step S13. Step S1 may further comprise at least one of a crushing step S10, a pretreatment step S11, a waste heat utilization step S14 (a drying step S14a and a distillation step S14b), and a solvent supply step S15.

The recycling facility 1 comprises a dehydration and washing device 12 (dehydration and washing portion) and a separation device 13 (separation portion). The recycling facility 1 may further comprise at least one of a crushing device 10 (crushing portion), a pretreatment device 11 (pretreatment portion), a drying device 14a (drying portion), a distillation device 14b (distillation portion), and a solvent supply device 15 (solvent supply portion).

The dehydration and washing step S12 and the separation step S13 are respectively performed by the dehydration and washing device 12 and the separation device 13. The crushing step S10, the pretreatment step S11, the drying step S14a, the distillation step S14b, and the solvent supply step S15 are respectively performed by the crushing device 10, the pretreatment device 11, the drying device 14a, the distillation device 14b, and the solvent supply device 15. Each step will be specifically described below.

The crushing step S10 is a step of crushing the used absorbent article. The crushing device 10 for performing the crushing step S10 is not particularly limited as long as it can expose the internal superabsorbent polymer and pulp fiber, and examples thereof include biaxial crushers (for example, biaxial rotary crushers, biaxial differential crushers, and biaxial shear crushers). As a result, the used absorbent article is partially or wholly shredded, whereby a plurality of small pieces each comprising one or a plurality of constituent members are produced. The size of the small piece is not particularly limited as long as the small piece can be handled in subsequent steps, and examples thereof include a square having 1 to 10 cm sides in a plan view or equivalent sizes (approximately the same area). Crushing as used herein also refers to the case where the sheets (for example, the top sheet, back sheet, and exterior sheet) constituting the outer surface of the used absorbent article are torn to release the internal superabsorbent polymer and pulp fiber to the outside thereof. In this case, the plurality of small pieces may include one or more pieces of the torn sheets, and one or more masses comprising released superabsorbent polymer and pulp fiber.

The crushing step S10 may be performed in air or in a liquid. When the crushing step S10 is performed in a liquid, examples of the liquid include water and the aqueous solution used in the pretreatment step S11, specifically, an acidic aqueous solution (which will be described later) and a polyvalent metal salt aqueous solution (which will be described later). Thus, when an acidic aqueous solution or polyvalent metal salt aqueous solution is used as the liquid, it can be said that the crushing step S10 and the pretreatment step S11 are performed simultaneously.

The crushing step S10 is primarily performed to facilitate separation of the one or more constituent members of the used absorbent article from other constituent members in the separation step S13, and thus, needs only to be performed before the separation step S13. Therefore, the crushing step S10 needs only to be performed before the separation step S13, and before the dehydration and washing step S12, during the dehydration and washing step S12, or after the dehydration and washing step S12. Note that "before the dehydration and washing step S12" means before the pretreatment step S11, during the pretreatment step S11, or after the pretreatment step S11.

When the crushing step S10 is not performed and an uncrushed used absorbent article is used as-is in the dehydration and washing step S12 (with or without the pretreatment step S11), if, for example, an organic solvent (which will be described later) is used as the dehydrating agent, the adhesive of the used absorbent article can be dissolved in the organic solvent, whereby the used absorbent article can be decomposed into its individual constituent members.

The pretreatment step S11 is a step of reducing the moisture absorbed by the used absorbent article (in particular, the superabsorbent polymer) performed on the used absorbent article that has been crushed via the crushing step S10 or that has not been crushed, i.e., a step of dehydrating the used absorbent article. Since the pretreatment step S11 is a step which is performed before the dehydration and washing step S12, it is sufficient that the used absorbent article or the crushed used absorbent article be dehydrated to a certain extent, and complete dehydration is not necessarily required. The ratio of moisture to be removed can be, for example, 10 to 90% by mass of the moisture absorbed by the used absorbent article.

The pretreatment step S11 is specifically a step in which the used absorbent article is subjected to at least one of acidic aqueous solution treatment, polyvalent metal salt treatment, high-pressure steam treatment, freeze-drying treatment, and organic solvent treatment as the pretreatment. These treatments are treatments for dehydrating the superabsorbent polymer. The acidic aqueous solution treatment is a treatment in which the superabsorbent polymer is brought into contact with an acidic aqueous solution. The polyvalent metal salt treatment is a treatment in which the superabsorbent polymer is brought into contact with an aqueous solution comprising a polyvalent metal salt. The high-pressure steam treatment is a treatment in which the superabsorbent polymer is brought into contact with high-pressure steam. The freeze-drying treatment is a treatment in which the superabsorbent polymer is exposed to a low-temperature, dry atmosphere. The organic solvent treatment is a treatment in which the superabsorbent polymer is brought into contact with a hydrophilic organic solvent. Known methods can be used as each of these treatments, and in particular, the acidic aqueous solution treatment and polyvalent metal salt treatment are as described below.

The step of the acidic aqueous solution treatment performed as the pretreatment step S11 is a step of inactivating the superabsorbent polymer of the used absorbent article with an acidic aqueous solution. For example, the used absorbent article (whether or not subjected to crushing in the crushing step S10) is immersed in an acidic aqueous solution to bring the superabsorbent polymer into contact with the acid to inactivate the superabsorbent polymer. The acidic aqueous solution treatment is preferable as compared to the polyvalent metal salt treatment from the viewpoint of a reduced likelihood of ash residue.

The acid (inactivator) in the acidic aqueous solution is not particularly limited, and examples thereof include acidic substances such as inorganic acids and organic acids. Examples of inorganic acids include sulfuric acid, hydrochloric acid, and nitric acid, and sulfuric acid is preferable from the viewpoints of a lack of chlorine and cost. Examples of organic acids include carboxylic acids having multiple carboxyl groups (for example, citric acid), carboxylic acids having one carboxyl group (for example, acetic acid), and sulfonic acids (for example, methanesulfonic acid). The organic acid preferably has multiple carboxyl groups, and is more preferably citric acid, from the viewpoints of ease of forming a chelate complex with divalent or higher metals (for example, calcium) contained in excrement and reduced likelihood of ash residue in the superabsorbent polymer and the pulp fiber. The acid concentration in the acidic aqueous solution is not particularly limited as long as the dehydrating function thereof can be exhibited, and may be, for example, 0.1 to 30% by mass. In order to efficiently inactivate the superabsorbent polymer, it is preferable that the acid (inactivator) have an acid dissociation constant (pKₐ, in water) less than the acid dissociation constant (pKₐ, in water) of the acid group in the superabsorbent polymer.

The acidic aqueous solution preferably has a pH within a predetermined range. The upper limit of the pH is preferably 6.0, and more preferably 5.0. By adopting a pH of 6.0 or less, dehydration of the superabsorbent polymer is facilitated. The lower limit of the pH is preferably 0.5, and more preferably 1.0. By adopting a pH of 0.5 or more, damage to the pulp fiber, which is another collection target, is suppressed. The pH is measured at 25°C using, for example, a twin pH meter AS-711 manufactured by Horiba, Ltd.

The specific configuration of the pretreatment device 11 for performing the acidic aqueous solution treatment is not particularly limited as long as the superabsorbent polymer can be immersed in the acidic aqueous solution. The pretreatment device 11 comprises, for example, a tank which can store the acidic aqueous solution and in which a used absorbent article (or a crushed used absorbent article) comprising the superabsorbent polymer can be placed, a supply means which can supply the acidic aqueous solution into the tank, and a stirring means which can stir the acidic aqueous solution in the tank.

In the acidic aqueous solution treatment, the temperature of the acidic aqueous solution is not particularly limited and may be, for example, room temperature (25°C). To accelerate the reaction rate, the acidic aqueous solution may be heated within a temperature range lower than 100°C. The treatment time is not particularly limited and may be, for example, about 5 to 60 minutes.

When an acidic aqueous solution treatment has been performed as the pretreatment step S11, a part or all of the pretreatment liquid that is the used acidic aqueous solution may be supplied to the incineration facility 2. Specifically, the used pretreatment liquid comprising the used absorbent article (or a plurality of small pieces thereof) is filtered using a screen etc., to separate the used pretreatment liquid from the used absorbent article, and is then supplied to the incineration facility 2. In this case, the pretreatment liquid supplied to the incineration facility 2 can be used, for example, as cooling water for the equipment within the incineration facility 2 (for example, an incineration device 21, methane fermentation device 22, a power generation device 23). The pretreatment liquid used as cooling water may be mixed with other cooling water before use. As a result, in the recycling facility 1, the acidic aqueous solution waste liquid treatment steps and waste liquid treatment equipment can be reduced, and in the incineration facility 2, the amount of new cooling water supplied can be reduced.

Though not illustrated, when an acidic aqueous solution treatment step is performed as the pretreatment step S11, a reactivation treatment step in which the superabsorbent polymer inactivated by the acidic aqueous solution treatment is activated using alkali metal ions supplied from an alkali metal ion supply source is then performed. The reactivation treatment step may be performed before the dehydration and washing step S12. Alternatively, the reactivation treatment step may be included in the dehydration and washing step S12 to be performed during the dehydration and washing step S12. In this case, an aqueous solution comprising an alkali metal ion supply source is added to the solution in the dehydration and washing step S12. Alternatively, the reactivation treatment step may be performed after the dehydration and washing step S12.

Specifically, the reactivation treatment reactivates the inactivated superabsorbent polymer with alkali metal ions in an alkaline aqueous solution, which is an aqueous solution comprising an alkali metal ion supply source. At this time, the H ions in the superabsorbent polymer are substituted with alkali metal ions, whereby the inactivated superabsorbent polymer is neutralized to be a reactivated superabsorbent polymer. Specifically, the moisture-absorbing ability of the superabsorbent polymer is restored. When the reactivation treatment step is performed during the dehydration and washing step S12, since a dehydrating agent is present around the reactivated superabsorbent polymer, the reactivated superabsorbent polymer will not absorb water.

Examples of alkali metal ions include lithium ions, sodium ions, and potassium ions, as well as combinations thereof. The alkali metal ion supply source is not particularly limited as long as it can supply these alkali metal ions, and examples thereof include hydroxides of alkali metals and salts of hydroxides of alkali metals with acids having a greater acid dissociation constant than the acid group of the superabsorbent polymer. Examples of hydroxides of alkali metals include lithium hydroxide, sodium hydroxide, and potassium hydroxide, as well as combinations thereof. Examples of salts include lithium carbonate, sodium carbonate, potassium carbonate, lithium bicarbonate, sodium bicarbonate, potassium bicarbonate, lithium chloride, sodium chloride, and potassium chloride. The aqueous solution comprising the alkali metal ion supply source is preferably neutral or alkaline, and more preferably alkaline. The concentration of the alkali metal ion supply source in the alkaline aqueous solution is not particularly limited as long as the superabsorbent polymer can be reactivated thereby. When an alkali metal hydroxide is used as the alkali metal ion supply source, the concentration may be, for example, 0.5 to 50% by mass.

The specific configuration of the device for performing the reactivation treatment is not particularly limited as long as the inactivated superabsorbent polymer can be immersed in the alkaline aqueous solution. The device comprises, for example, a tank which can store the alkaline aqueous solution and in which a used absorbent article (or a crushed used absorbent article) comprising the superabsorbent polymer can be placed, a supply means which can supply the alkaline aqueous solution into the tank, and a stirring means which can stir the alkaline aqueous solution in the tank.

In the reactivation treatment, the temperature of the alkaline aqueous solution is not particularly limited, and may be, for example, room temperature (25°C). To accelerate the reaction rate, the alkaline aqueous solution may be heated within a temperature range lower than 100°C. The treatment time is not particularly limited, and may be, for example, about 5 to 60 minutes.

When a reactivation treatment step in which the superabsorbent polymer inactivated with the acidic aqueous solution is reactivated with alkali metal ions in an alkaline aqueous solution has been performed, a part or all of the used alkaline aqueous solution may be supplied to the incineration facility 2. Specifically, the used alkaline aqueous solution comprising the used absorbent article (or a plurality of small pieces thereof) is filtered through a screen etc., to separate the used alkaline aqueous solution from the used absorbent article, and is then supplied to the incineration facility 2. In this case, the alkaline aqueous solution supplied to the incineration facility 2 can be used, for example, as cooling water for the equipment within the incineration facility 2 (for example, the incineration device 21, the methane fermentation device 22, and the power generation device 23). The alkaline aqueous solution used as cooling water may be mixed with other cooling water before use. As a result, in the recycling facility 1, the alkaline aqueous solution waste liquid treatment steps and waste liquid treatment equipment can be reduced, and in the incineration facility 2, the amount of new cooling water supplied can be reduced.

When supplying both the used acidic aqueous solution and the used alkaline aqueous solution to the incineration facility 2, they may be mixed and supplied. In this case, the mixture of the acidic aqueous solution and the alkaline aqueous solution can be neutralized to produce a neutral or nearly neutral aqueous solution. As a result, the occurrence of effects on the equipment (for example, corrosion) when used as cooling water for the equipment in the incineration facility 2 (for example, the incineration device 21, the methane fermentation device 22, and the power generation device 23) can be suppressed.

The step of performing the polyvalent metal salt treatment as the pretreatment step S11 is a step in which the superabsorbent polymer of the used absorbent article is inactivated with polyvalent metal ions supplied from a polyvalent metal salt. For example, in this step, the used absorbent article (whether or not subjected to crushing in the crushing step S10) is immersed in a polyvalent metal salt aqueous solution to bring the superabsorbent polymer into contact with the polyvalent metal ions to inactivate the superabsorbent polymer. The polyvalent metal salt treatment is preferable as compared to the acidic aqueous solution treatment in that dehydration proceeds more easily.

The polyvalent metal salt in the polyvalent metal salt aqueous solution is not particularly limited, and examples thereof include alkaline earth metal salts and transition metal salts. Examples of alkaline earth metal salts include salts of beryllium, magnesium, calcium, strontium, and barium. Calcium chloride, calcium nitrate, magnesium chloride, and magnesium nitrate are preferable, and calcium chloride is more preferable. Examples of transition metal salts include salts of iron, cobalt, nickel, copper, and aluminum, and inorganic or organic acid salts are preferable. Examples of inorganic acid salts include iron chloride, iron sulfate, iron phosphate, iron nitrate, cobalt chloride, cobalt sulfate, cobalt phosphate, cobalt nitrate, nickel chloride, nickel sulfate, copper chloride, copper sulfate, and aluminum sulfate. Examples of organic acid salts include iron lactate, cobalt acetate, cobalt stearate, nickel acetate, and copper acetate. The concentration of the polyvalent metal salt in the polyvalent metal salt aqueous solution is not particularly limited as long as the dehydration function can be exhibited, and can be, for example, 0.1 to 10 mass % when an alkaline earth metal salt is used as the polyvalent metal.

The specific configuration of the pretreatment device 11 for performing the polyvalent metal salt treatment is not particularly limited as long as the superabsorbent polymer can be immersed in the polyvalent metal salt aqueous solution. The pretreatment device 11 comprises, for example, a tank which can store the polyvalent metal salt aqueous solution and in which the used absorbent article (or a decomposed used absorbent article) comprising the superabsorbent polymer can be placed, a supply means which can supply the polyvalent metal salt aqueous solution into the tank, and a stirring means which can stir the polyvalent metal salt aqueous solution in the tank.

In the polyvalent metal salt treatment, the temperature of the polyvalent metal salt aqueous solution is not particularly limited and can be, for example, room temperature (25°C). To accelerate the reaction rate, the polyvalent metal salt aqueous solution can be heated within a temperature range lower than 100°C. The treatment time is not particularly limited and can be, for example, about 10 to 120 minutes. The pH of the polyvalent metal salt aqueous solution is not particularly limited and can be, for example, 11 or less. When an alkaline compound is used, the pH of the aqueous solution is preferably greater than 7 and 11 or less.

When a polyvalent metal salt treatment has been performed as the pretreatment step S11, a part or all of the pretreatment liquid that is the used polyvalent metal salt aqueous solution may be supplied to the incineration facility 2. Specifically, the used pretreatment liquid comprising the used absorbent article (or a plurality of small pieces thereof) is filtered using a screen etc., to separate the used pretreatment liquid from the used absorbent article, and is then supplied to the incineration facility 2. In this case, the pretreatment liquid supplied to the incineration facility 2 can be used, for example, as cooling water for the equipment within the incineration facility 2 (for example, the incineration device 21, the methane fermentation device 22, and the power generation device 23). The pretreatment liquid used as cooling water may be mixed with other cooling water and used. As a result, in the recycling facility 1, the waste liquid treatment steps and waste liquid treatment equipment for the polyvalent metal salt aqueous solution can be reduced, and in the incineration facility 2, the amount of new cooling water supplied can be reduced.

When the polyvalent metal salt treatment is performed as the pretreatment step S11, the superabsorbent polymer that has been inactivated by the polyvalent metal salt treatment is subsequently subjected to a step of substituting the polyvalent metal ions with an acidic substance (acidic aqueous solution) (acidic substance substitution treatment), followed by a step of neutralizing the superabsorbent polymer in which the polyvalent metal ions have been substituted with the acidic substance using an alkaline substance (alkaline aqueous solution) comprising sodium (alkaline substance neutralization treatment). The step of substituting the polyvalent metal ions with an acidic substance is performed before the dehydration and washing step S12 or during the dehydration and washing step S12. When this step is performed during the dehydration and washing step S12, an aqueous solution comprising the acidic substance is added to the solution of the dehydration and washing step S12. The step of neutralizing the superabsorbent polymer using an alkaline substance is performed after the step of substituting the polyvalent metal ions with an acidic substance, and during the dehydration and washing step or after the dehydration and washing step S12. When this step is performed during the dehydration and washing step S12, an aqueous solution comprising an alkaline substance comprising sodium is added to the solution of the dehydration and washing step S12.

The step of substituting polyvalent metal ions with an acidic substance (acidic substance substitution treatment) performed for the superabsorbent polymer that has been inactivated by the polyvalent metal salt treatment is substantially the same as the acidic aqueous solution treatment described above. However, the acid in the acidic aqueous solution is preferably a strong inorganic acid. Examples of such inorganic acids include sulfuric acid, hydrochloric acid, and nitric acid, and sulfuric acid is preferable from the viewpoints of a lack of chlorine and cost.

The step of neutralizing the superabsorbent polymer in which the polyvalent metal ions have been substituted with an acidic substance using an alkaline substance (alkaline substance neutralization treatment) described above is substantially the same as the reactivation treatment described above. However, the alkali metal ion supply source is an alkaline substance comprising sodium, such as sodium hydroxide, and the alkali metal ions in the alkaline aqueous solution that comprises the alkali metal ion supply source are sodium ions.

In the pretreatment step S11, the ratio of the absorbent article (or plurality of small pieces) in the aqueous solution used in the various treatments is not particularly limited as long as the various treatments can be performed. Examples of this ratio include 0.1 to 50% by mass, and 1 to 40% by mass is preferable. By setting this ratio to 0.1% by mass or more, the treatments can efficiently proceed. By setting this ratio to 50% by mass or less, the various treatments can proceed easily.

When the superabsorbent polymer inactivated with the polyvalent metal salt aqueous solution has been subjected to an acidic substance substitution treatment step using an acidic aqueous solution, a part or all of the used acidic aqueous solution may be supplied to the incineration facility 2. Furthermore, when the superabsorbent polymer subjected to the acidic substance substitution treatment using an acidic aqueous solution has been subjected to an alkaline substance neutralization treatment step using an alkaline aqueous solution, a part or all of the used alkaline aqueous solution may be supplied to the incineration facility 2. In this case, the acidic aqueous solution and alkaline aqueous solution supplied to the incineration facility 2 can be used, for example, as cooling water for equipment within the incineration facility 2 (for example, the incineration device 21, the methane fermentation device 22, and the power generation device 23). The acidic aqueous solution and alkaline aqueous solution used as cooling water may be mixed with other cooling water before use. As a result, in the recycling facility 1, acidic aqueous solution waste liquid treatment steps and waste liquid treatment equipment can be reduced, and in the incineration facility 2, the amount of new cooling water supplied can be reduced. When both the acidic aqueous solution and alkaline aqueous solution are supplied to incineration facility 2, they may be mixed and supplied. In this case, the mixture of the acidic aqueous solution and alkaline aqueous solution can be neutralized to produce a neutral or nearly neutral aqueous solution. As a result, the occurrence of effects on the equipment when used as cooling water for the equipment (for example, the incineration device 21) within incineration facility 2 can be suppressed.

The pretreatment step S11 preferably comprises a step of separating and removing moisture generated in the pretreatment step S11 before the dehydration and washing step S12. For example, the moisture generated in the pretreatment step S11 is separated and removed by filtering the aqueous solution comprising the used absorbent article (or plurality of small pieces) in the pretreatment step S11 via a screen or the like. By removing the moisture once before the dehydration and washing step S12 in this manner, the solution comprising the dehydrating agent (the solution may comprise an oxidizing agent: which will be described later) in the dehydration and washing step S12 is not diluted, whereby treatment can be performed at the desired concentration.

The device for supplying a part or all of the waste liquid (acidic aqueous solution, alkaline aqueous solution, polyvalent metal salt aqueous solution) from the pretreatment step S11 to the incineration facility 2 can be referred to as a waste liquid supply device (waste liquid supply portion: not illustrated). An example of such a device is a liquid delivery pump (not illustrated) attached to the pretreatment device 11.

The dehydration and washing step S12 is a step of dehydrating and washing the used absorbent article with a treatment liquid comprising a dehydrating agent. In a preferred aspect of the present embodiment, the dehydration and washing step S12 is a step in which the mixture comprising the superabsorbent polymer having an acid group, and the pulp fiber, each being the constituent member of the used absorbent article, is dehydrated and washed with a solution comprising a dehydrating agent capable of dehydrating the superabsorbent polymer and the pulp fiber (the solution may further comprise an oxidizing agent).

The mixture comprising the superabsorbent polymer and pulp fiber, each being the constituent member, is not particularly limited as long as it comprises the superabsorbent polymer and the pulp fiber of the used absorbent article. For example, the mixture may be a used absorbent article that has been subjected to neither the crushing step S10 nor the pretreatment step S11. When the used absorbent article has been subjected to the crushing step S10, the mixture is a plurality of small pieces, formed by crushing the used absorbent article, which comprise the superabsorbent polymer and the pulp fiber, wherein the superabsorbent polymer and pulp fiber have not been individually separated. When the used absorbent article has been subjected to the pretreatment step S11, the mixture is a pretreated used absorbent article which comprises the superabsorbent polymer and the pulp fiber dehydrated to a certain extent, wherein the superabsorbent polymer and pulp fiber have not been individually separated. When the used absorbent article has been subjected to both the crushing step S10 and the pretreatment step S11, the mixture is a plurality of small pieces which have been pretreated and comprise the superabsorbent polymer and the pulp fiber dehydrated to a certain extent, wherein the superabsorbent polymer and pulp fiber have not been individually separated. The mixture may be a mixture comprising the superabsorbent polymer and the pulp fiber independently prepared in advance, regardless of the crushing step S10 or the pretreatment step S11.

The mixture may further comprise a plastic material, which is a constituent member of the used absorbent article. In this case, the dehydration and washing step S12 is a step in which the mixture comprising the superabsorbent polymer, the pulp fiber, and the plastic material, which are constituent members of the used absorbent article, is dehydrated and washed with a solution comprising a dehydrating agent and an oxidizing agent. The mixture comprising the superabsorbent polymer, the pulp fiber, and the plastic material, which are constituent members of the used absorbent article, is not particularly limited as long as it comprises the superabsorbent polymer, the pulp fiber, and the plastic material of the used absorbent article, and may or may not have been subjected to the crushing step S10 and/or the pretreatment step S11, in the same manner as the case of the mixture comprising the superabsorbent polymer and the pulp fiber described above.

The solution comprising a dehydrating agent, and preferably comprising an oxidizing agent, may be composed solely of the dehydrating agent, may be composed solely of the dehydrating agent and the oxidizing agent, or may comprise another solvent, such as an organic solvent or water, as long as such a solvent does not affect dehydration or dehydration and oxidation. The total ratio of the dehydrating agent or the dehydrating agent and the oxidizing agent in the solution is, for example, 50% by mass or more. From the viewpoint of the dehydration or the dehydration and oxidation effects, a higher ratio is preferable, and thus, the ratio is preferably 70% by mass or less, more preferably 80% by mass or less, and further preferably 90% by mass or less. When water is included as another solvent, the ratio of water is preferably 10% by mass or less, more preferably 5% by mass or less, and further preferably 1% by mass or less.

When used in combination with an oxidizing agent, the dehydrating agent is not particularly limited as long as it is resistant to oxidation by the oxidizing agent and is capable of dehydrating the superabsorbent polymer and the pulp fiber included in the used absorbent article. The dehydrating agent is, for example, a liquid, which is considered to be able to dehydrate the constituent member by dissolving the moisture contained in the constituent member into itself, and also remove contaminants by dissolving the contaminants into itself. However, the mechanism is not limited to this.

The dehydrating agent is not particularly limited as long as it has a dehydrating effect and is preferably capable of removing contaminants, and examples thereof include organic solvents. Examples of organic solvents include hydrophilic organic solvents and polar organic solvents. Examples of organic solvents belonging to at least one thereof include ketone-based organic solvents and alcohol-based organic solvents. Examples of other organic solvents include fluorine-based organic solvents. Examples of ketone-based organic solvents include acetone. Acetone dissolves water well, is resistant to oxidation by oxidizing agents, and has the property of protecting functional groups. Thus, acetone can dehydrate the superabsorbent polymer and the pulp fiber while suppressing the decomposition (dissolution) of the constituent member, in particular, the superabsorbent polymer which is readily decomposable, and can remove some or all of the contaminants contained in each of the constituent members. When the dehydrating agent is an organic solvent, the adhesive bonding the constituent members of the used absorbent article can be dissolved, facilitating separation of the constituent members from each other. Examples of alcohol-based organic solvents include ethanol and methanol. Examples of the fluorine-based organic solvent include 1-chloro-2,3,3-trifluoropropene and 1,1,1,3,3-pentafluorobutane.

The ratio of the dehydrating agent in the solution is, for example, 50% by mass or more. From the viewpoint of the effects of dehydration and removal of contaminants, the ratio of the dehydrating agent in the solution is preferably higher, and when the oxidizing agent is a gas, the ratio is preferably 70% by mass or more, and more preferably 90% by mass or more.

The oxidizing agent is not particularly limited as long as it can remove contaminants contained in the used absorbent article while suppressing the impact on the constituent member (for example, oxidative decomposition of the superabsorbent polymer, damage to the pulp fiber). The oxidizing agent is, for example, a liquid or a gas mixed with a liquid, which is considered to reduce contaminants by oxidatively decomposing the contaminants, reducing their molecular weight, and making the contaminants more soluble in the solution. However, the mechanism is not limited to this.

Examples of oxidizing agents include ozone, hydrogen peroxide, and chlorine-based substances (for example, chlorine), or a combination of two or more of these. These oxidizing agents have relatively high oxidizing power, facilitating the reduction of contaminants contained in the constituent member of the used absorbent article, such as the superabsorbent polymer, the pulp fiber, and the plastic material. This allows for the removal of bacteria and the reduction of odorous and colored substances, enabling the sterilization, deodorization, and decolorization (bleaching) of the constituent member. When acetone is used as the dehydrating agent, hydrogen peroxide is not used as the oxidizing agent.

The oxidizing agent may be mixed with the liquid of the dehydrating agent, or may be mixed into another solvent (for example, an organic solvent, water) and then mixed with the dehydrating agent.

Ozone is preferably used as the oxidizing agent. In this case, the dehydration and washing step S12 comprises an application step S12a of applying an ozone-containing gas to the treatment liquid, which is a solution comprising a dehydrating agent. The ozone-containing gas can be, for example, a mixture of ozone with air or nitrogen.

In the application step S12a, when ozone (ozone-containing gas) is supplied to a dehydrating agent to form a solution comprising the dehydrating agent and the oxidizing agent, the ozone concentration in the solution is not particularly limited as long as such concentration can reduce contaminants contained in the constituent member. The ozone concentration is, for example, 0.2 to 2 ppm by mass, and preferably 0.4 to 1.5 ppm by mass. By setting the concentration to 0.2 ppm by mass or more, contaminant reduction is facilitated, and by setting the concentration to 2 ppm by mass or less, oxidative decomposition of the superabsorbent polymer and damage to the pulp fiber can be suppressed. The contact time between the solution comprising ozone and the constituent member is not particularly limited, as long as it is a time sufficient to reduce contaminants contained in the constituent member. Generally, the contact time is shorter when the ozone concentration is high and longer when the ozone concentration is low. The contact time is, for example, 1 to 200 minutes, and preferably 2 to 60 minutes. The product of the ozone concentration (ppm by mass) and the contact time (minutes) (hereinafter also referred to as the "CT value") is preferably 0.2 to 40 ppm by mass-min, and more preferably 0.5 to 20 ppm by mass-min. By setting the CT value to 0.2 ppm by mass-min or more, the reduction of contaminants is facilitated, and by setting the CT value to 40 ppm by mass-min or less, oxidative decomposition of the constituent member, and in particular, the superabsorbent polymer which is readily decomposable, can be suppressed. Treatment with ozone can reduce contaminants contained in the constituent member, for example, remove bacteria and reduce odorous and colored substances, enabling the sterilization, deodorization, and decolorization (bleaching) of the constituent member. Examples of ozone generators for supplying gaseous ozone (ozone-containing gas) into the dehydrating agent include the ED-OWX-2 Ozone Water Exposure Tester manufactured by Eco Design Inc., the OS-25V Ozone Generator manufactured by Mitsubishi Electric Corporation, and the REX MC Ozonizer MC-985S manufactured by Rex Industrial Co., Ltd.

When gas (for example, ozone) is used as the oxidizing agent, the oxidizing agent may be supplied to the dehydrating agent by, for example, the following method. In this method, a predetermined amount of oxidizing agent is generated in an oxidizing agent generator, and the oxidizing agent is continuously supplied to the dehydrating agent in a treatment tank at a predetermined air flow rate, while the waste oxidizing agent (used oxidizing agent) is continuously discharged (exhausted) to the outside of the treatment tank at the same air flow rate. In this case, a flow of oxidizing agent is easily generated, a fresh oxidizing agent is easily supplied to the surface of the constituent member, and reactants are easily and continuously carried away from the surface. As a result, the oxidation reaction on the surface of the constituent member can more reliably proceed.

Alternatively, the oxidizing agent may comprise either an active species generated by irradiating another oxidizing agent included in the solution with ultraviolet rays, or, when the solution comprises water, an active species generated by irradiating the water and/or another oxidizing agent included in the solution with ultraviolet rays. For example, when the wavelength of ultraviolet rays is 253.7 nm, the active species generated by the reaction of ultraviolet rays with an oxidizing agent (ozone + water, hydrogen peroxide), i.e., hydroxyl radicals, can decompose at least a portion of contaminants (organic substances). When the wavelength of ultraviolet rays is 184.9 nm, the active species generated by the reaction of ultraviolet rays with water, i.e., hydroxyl radicals, can decompose at least a portion of contaminants (organic substances).

The ratio of the used absorbent article (or plurality of small pieces) in the solution is not particularly limited as long as the dehydration and washing step S12 can be performed. Examples of the ratio include 0.1 to 20% by mass, and preferably 1 to 10% by mass. By setting the ratio to 0.1% by mass or more, treatment can proceed efficiently. By setting the ratio to 20% by mass or less, dehydration and washing can easily proceed.

Contaminants such as excrement, sebum, bacteria, odorous substances, and colored substances derived therefrom, machine oil from production equipment, and various organic substances are thought to be reduced as follows. Specifically, through dehydration by a dehydrating agent, contaminants absorbed inside the constituent member are primarily expelled to the outside along with moisture. At this time, contaminants attached to the constituent member are expelled (eluted) and removed along with the released moisture. When an oxidizing agent is included, simultaneously, through oxidation, contaminants attached to the constituent member (including those expelled from the inside and attached) are primarily oxidatively decomposed, reduced in molecular weight, solubilized, and removed. This also enables sterilization, deodorization, and bleaching of the constituent member. However, the reduction of contaminants in the constituent member described above is not limited to this mechanism.

In the dehydration and washing step S12, the temperature for dehydration and washing is not particularly limited as long as the dehydration and washing treatment can be performed, and this step is performed at least at a temperature lower than the boiling point of the dehydrating agent. Examples of the temperature for dehydration and washing include room temperature (for example, 25°C) to 50°C, and preferably 30 to 40°C. By setting the temperature to equal to or higher than room temperature, the time required for dehydration and washing can be easily shortened. By setting the temperature to 50°C or less, suppression of evaporation (boiling) of the dehydrating agent, for example, the organic solvent and suppression of dehydration condensation of the acid groups of the superabsorbent polymer are facilitated, whereby a decrease in water absorption is inhibited. The time for dehydration and washing is not particularly limited as long as the dehydration and washing treatment can be performed, and can be, for example, 1 to 200 minutes.

When ozone (ozone-containing gas) is used as the oxidizing agent, the ozone-containing gas is supplied to the treatment liquid, which is the solution comprising a dehydrating agent, and a part of the ozone-containing gas is then released from the treatment liquid. A part or all of the released used ozone-containing gas may then be supplied to the incineration facility 2. In this case, the ozone-containing gas is supplied, for example, to the incineration device 21 (for example, an incineration device) within the incineration facility 2. The ozone-containing gas is decomposed into oxygen by the heat of the incineration device 21, which can contribute to the combustion of waste. As a result, in the recycling facility 1, the ozone-containing gas exhaust gas treatment steps and exhaust gas treatment equipment can be omitted, and in the incineration facility 2, efficiency of waste combustion can be increased.

Alternatively, the ozone-containing gas may be supplied to, for example, the methane fermentation device 22 (not illustrated) in the incineration facility 2. In this case, if the ozone-containing gas is passed through a biomass resource serving as raw material for methane fermentation in advance to decompose and solubilize the organic substances constituting the biomass resource, methane fermentation of the biomass resource can be promoted and the yield of methane gas can be increased.

The specific configuration of the dehydration and washing device 12 for performing the dehydration and washing step S12 is not particularly limited, as long as it can bring into contact (or immerse) the mixture comprising the constituent members of the used absorbent article (for example, the superabsorbent polymer, the pulp fiber, and the plastic material) with a solution comprising a dehydrating agent and an oxidizing agent. The dehydration and washing device 12 comprises, for example, a tank in which the used absorbent article (or a crushed used absorbent article) can be placed and which can store a solution comprising a dehydrating agent and an oxidizing agent, a supply means which can supply the dehydrating agent and the oxidizing agent into the tank, and a stirring means which can stir the solution in the tank. When ozone is used as the oxidizing agent, the dehydration and washing device 12 may comprise an ozone generator.

In the present method, when the acidic aqueous solution treatment is performed as the pretreatment step S11 and the reactivation treatment is performed during the dehydration and washing step S12, it is preferable that the solution comprising an oxidizing agent and a dehydrating agent in the dehydration and washing step S12 contain as little unnecessary moisture as possible (except for moisture released from the used absorbent article). An aqueous solution comprising an alkali metal ion supply source is supplied to that solution separately from the oxidizing agent and dehydrating agent. As a result, the reactivation treatment is performed while the dehydration and washing step S12 is being performed. In this case, the solution comprising the oxidizing agent and dehydrating agent may be supplied with the aqueous solution comprising the alkali metal ion supply source, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising the alkali metal ion supply source may then be supplied.

In the present method, when the polyvalent metal salt treatment is performed as the pretreatment step S11 and the acidic substance substitution treatment is performed during the dehydration and washing step S12, it is preferable that the solution comprising an oxidizing agent and the dehydrating agent in the dehydration and washing step S12 contain as little moisture as possible (except for moisture released from the used absorbent article). An aqueous solution comprising the acidic substance is supplied to that solution separately from the oxidizing agent and dehydrating agent. Thus, the acidic substance substitution treatment is performed while the dehydration and washing step S12 is being performed. In this case, the aqueous solution comprising the acidic substance may be supplied to the solution comprising an oxidizing agent and a dehydrating agent, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising the acidic substance may then be supplied.

When the polyvalent metal salt treatment is performed as the pretreatment step S11 and the alkaline substance neutralization treatment is performed during the dehydration and washing step S12 after the acidic substance substitution treatment, it is preferable that the solution comprising an oxidizing agent and a dehydrating agent in the dehydration and washing step S12 contain as little unnecessary moisture as possible (except for moisture released from the used absorbent article). An aqueous solution comprising an alkaline substance comprising sodium is supplied to that solution, separately from the oxidizing agent and dehydrating agent. Thus, the alkaline substance neutralization treatment is performed while the dehydration and washing step S12 is being performed. In this case, the solution comprising an oxidizing agent and a dehydrating agent may be supplied with an aqueous solution comprising an alkaline substance comprising sodium, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising an alkaline substance comprising sodium may then be supplied.

When both the acidic substance substitution treatment and the alkaline substance neutralization treatment are performed during the dehydration and washing step S12, first, the used absorbent article (or a crushed used absorbent article) is supplied to the solution comprising a dehydrating agent (preferably, further comprising an oxidizing agent), and the dehydration and washing treatment is performed for a predetermined time (for example, 1 to 30 minutes). Next, the aqueous solution comprising an acidic substance is supplied to that solution, and the acidic substance substitution treatment is performed for a predetermined time (for example, 1 to 30 minutes). Next, the aqueous solution comprising an alkaline substance comprising sodium is supplied to that solution, and the alkaline substance neutralization treatment is performed for a predetermined time (for example, 1 to 30 minutes).

In the dehydration and washing step S12, in addition to the ozone-containing gas when ozone is used as the oxidizing agent, gases comprising various components may be generated by the treatment. Thus, the gases comprising various components generated by the treatment may be present in the tank in which the solution comprising the dehydrating agent (preferably further comprising an oxidizing agent) is stored. These gases may include harmful gases, such as odors comprising malodorous components (for example, nitrogen compounds, sulfur compounds). Thus, a part or all of the harmful gases (for example, odors) may be supplied to the incineration facility 2. In this case, the harmful gases are supplied to, for example, the incineration device 21 or the methane fermentation device 22 within the incineration facility 2. The harmful gases are decomposed and rendered harmless (for example, deodorized) by the heat of the incineration device 21, or are subjected to methane fermentation in the methane fermentation device 22. As a result, in the recycling facility 1, odorous exhaust gas treatment steps and exhaust gas treatment equipment can be reduced. In the incineration facility 2, combustion gas for the power generation device 23 and raw materials for methane fermentation can be secured. The ozone-containing gas and the gases comprising various components generated by the treatment can be combined and supplied to the incineration device 21 in the incineration facility 2, enabling efficient supply.

The device for supplying a part or all of the exhaust gas (ozone-containing gas, odors) from the dehydration and washing step S12 to the incineration facility 2 can be referred to as an exhaust gas supply device (exhaust gas supply portion: not illustrated). An example of such a device is an air delivery pump (not illustrated) attached to the dehydration and washing device 12.

The separation step S13 is a step of separating at least the superabsorbent polymer and the pulp fiber from the solution comprising the mixture that comprises the superabsorbent polymer and the pulp fiber. In this separation step S13, the solution comprising the mixture that comprises the superabsorbent polymer and the pulp fiber is separated into the pulp fiber and the superabsorbent polymer and a solution comprising contaminants and other materials. As a result, the pulp fiber and superabsorbent polymer, which have been dehydrated and washed and have had contaminants and other materials reduced therefrom, are separated and collected together, for example.

The specific configuration of the separation device 13 for performing the separation step S13 is not particularly limited, as long as it can separate the solution comprising the mixture that comprises the superabsorbent polymer and the pulp fiber into the pulp fiber and the superabsorbent polymer and a solution comprising contaminants and other materials. Examples of the separation device 13 include a device comprising a screen which does not allow the superabsorbent polymer and the pulp fiber to pass through but allows the solution (comprising contaminants and other materials (small foreign matter)) to pass through. When the mixture comprises other materials (large foreign matter) which are larger than the superabsorbent polymer and the pulp fiber, the device needs only to further comprise a screen which allows the superabsorbent polymer and the pulp fiber to pass through but does not allow such other materials (large foreign matter) to pass through.

When the pulp fiber and the superabsorbent polymer have been separated and collected together, the pulp fiber and the superabsorbent polymer can be easily reused together as materials for a single product. Such products include absorbent sheets, absorbent bodies, cat litter, soil-modifying materials, and solid fuel. The superabsorbent polymer and the pulp fiber that have been separated together may be further separated from each other using a screen or similar device.

The solution described above may further comprise plastic material, which is the constituent member of the used absorbent article. In this case, the separation step S13 is a step of separating the superabsorbent polymer, the pulp fiber, and the plastic material from the solution comprising the mixture that comprises the superabsorbent polymer, the pulp fiber, and the plastic material, which are constituent members of the used absorbent article. As a result, the pulp fiber, the superabsorbent polymer, and the plastic material, which have been dehydrated and washed and have had contaminants and other materials reduced, are separated and collected together, for example. An example of a device which can achieve this is a device comprising one or more screens as described above.

When the pulp fiber, the superabsorbent polymer, and the plastic material have been separated and collected together, the pulp fiber, the superabsorbent polymer, and the plastic material can easily be reused together as materials for a single product. Examples of such products include cat litter, building materials (including sound-absorbing materials and cement material), injection-molded products, and solid fuel. The plastic material may be further separated from the pulp fiber, superabsorbent polymer, and plastic material that have been separated together using a screen or similar device. As a result, the plastic material can be used individually (for example, in bags produced using the inflation method).

In the separation step S13, the gases comprising various components may be generated from the treatment liquid that is a solution comprising contaminants and other materials. Thus, the gases comprising various components generated by the treatment may be present in the separation device 13. These gases may include harmful gases, such as odors comprising malodorous components. Therefore, a part or all of these harmful gases may be supplied to the incineration facility 2. In this case, the harmful gases are supplied to, for example, the incineration device 21 or the methane fermentation device 22 within the incineration facility 2. The harmful gases are then decomposed and rendered harmless by the heat of the incineration device 21, or are subjected to methane fermentation in the methane fermentation device 22. As a result, in the recycling facility 1, odor treatment steps and equipment can be reduced. In the incineration facility 2, combustion gases for the power generation device 23 and raw materials for methane fermentation can be secured.

The device for supplying a part or all of the exhaust gas (odor) from the separation step S13 to the incineration facility 2 can be referred to as an exhaust gas supply device (exhaust gas supply portion: not illustrated). An example of such a device is an air delivery pump (not illustrated) attached to the separation device 13.

The waste heat utilization step S14 is a step in the recycling facility 1 of utilizing a part of the waste heat generated by the incineration facility 2 (for example, the incineration device 21). The waste heat utilization step S14 comprises at least one of a drying step S14a and a distillation step S14b. Either the drying step S14a or the distillation step S14b may be performed in the incineration facility 2. The waste heat utilization step S14 is not limited to the drying step S14a and the distillation step S14b, and may be used as a heat source required for other devices in the recycling facility 1. The waste heat utilization step S14 may also utilize, in the recycling facility 1, a part of the waste heat generated by the methane fermentation device 22 or the power generation device 23 in the incineration facility 2.

The pulp fiber and the superabsorbent polymer or the superabsorbent polymer, the pulp fiber, and the plastic material that have been separated in the separation step S13 are supplied to the drying step S14a (drying device 14a) of the waste heat utilization step S14. Conversely, the treatment liquid that is a solution comprising contaminants and other materials separated in the separation step S13 is supplied to the distillation step S14b (distillation device 14b) of the waste heat utilization step S14.

The drying step S14a utilizes a part of the waste heat generated by the incineration facility 2 (for example, the incineration equipment 21) to dry the supplied constituent members, such as the pulp fiber and the superabsorbent polymer or the superabsorbent polymer, the pulp fiber, and the plastic material, by heating (and reducing pressure). If necessary, washing with water or a solvent may be performed once before drying. Note that the drying step S14a may utilize a part of the waste heat generated by the methane fermentation device 22 or the power generation device 23 of the incineration facility 2.

The drying step S14a is performed by placing the constituent member in a dry atmosphere at a temperature higher than room temperature, or by blowing dry air at a temperature higher than room temperature onto the constituent member. The drying temperature can be, for example, 40 to 110°C, and is preferably 50 to 100°C. By setting the drying temperature to 40°C or higher, the drying time can be shortened. By setting the drying temperature to 110°C or lower, the constituent members can be prevented from sticking to each other and from deteriorating due to heat. The drying time can be, for example, 30 to 300 minutes. The drying step S14a may be performed under reduced pressure, for example, at 0.1 to 100 kPa, in order to accelerate drying. The drying device 14a is not particularly limited as long as it can dry the constituent members.

The drying step S14a is performed after the dehydration and washing step S12 and at least one of before the separation step S13 and after the separation step S13. In cases in which the use of a dehydrating agent in the dehydration and washing step S12 facilitates drying of the constituent member, the drying step S14a can be omitted.

The drying step S14a may comprise a step of collecting the dehydrating agent (for example, the organic solvent), which is the treatment liquid, by cooling the vapor generated when the supplied constituent members are dried. In this case, the collected dehydrating agent is supplied to the solvent supply step S15.

The distillation step S14b utilizes a part of the waste heat generated by the incineration facility 2 (for example, the incineration equipment 21) to heat the supplied treatment liquid, thereby boiling and evaporating the dehydrating agent included in the treatment liquid. The vapor is then cooled to collect the dehydrating agent. Specifically, the dehydrating agent is separated and collected by distillation. Contaminants have been reduced in the collected dehydrating agent. The treatment liquid remaining undistilled comprises contaminants and other materials. The distillation device 14b is not particularly limited as long as it can distill the treatment liquid. Note that the distillation step S14b may utilize a part of the waste heat generated by the methane fermentation device 22 or the power generation device 23 of the incineration facility 2.

In the distillation step S14b, a part or all of the treatment liquid remaining undistilled may be supplied to the incineration facility 2. In this case, contaminants in the treatment liquid, such as various organic substances such as excrement, sebum, and other materials, are incinerated in the incineration device 21 within the incineration facility 2, or are subjected to methane fermentation in the methane fermentation device 22 within the incineration facility 2. As a result, in the recycling facility 1, the disposal treatment steps and disposal treatment equipment for contaminants in the treatment liquid can be reduced, and in the incineration facility 2, combustion gas for the power generation device 23 and raw materials for methane fermentation can be secured.

The step of supplying a part or all of the treatment liquid remaining undistilled in the distillation step S14b to the incineration facility 2 can be referred to as a treatment liquid supply step (not illustrated). In this case, the device for supplying a part or all of the treatment liquid remaining undistilled in the distillation device 14b to the incineration facility 2 can be referred to as a treatment liquid supply device (treatment liquid supply portion: not illustrated). An example of such a device is a liquid delivery pump (not illustrated) attached to distillation device 14b.

Note that a part or all of the treatment liquid that is a solution comprising contaminants and other materials separated in the separation step S13 may be supplied to the incineration facility 2 without undergoing the distillation step S14b (distillation device 14b). The step of supplying a part or all of the treatment liquid to the incineration facility 2 can also be referred to as a treatment liquid supply step (not illustrated). In this case, contaminants in the treatment liquid, such as various organic substances such as excrement, sebum, and other materials, may be incinerated in the incineration device 21 within the incineration facility 2, or may be subjected to methane fermentation in the methane fermentation device 22 within the incineration facility 2. In this case, the device for supplying a part or all of the treatment liquid to the incineration facility 2 can also be referred to as a treatment liquid supply device (treatment liquid supply portion: not illustrated). An example of such a device is a liquid delivery pump.

At least one of the drying device 14a and the distillation device 14b utilizes the waste heat from the incineration facility 2 to perform the waste heat utilization step S14, i.e., at least one of the drying step S14a and the distillation step S14b, and thus, can be referred to as a waste heat utilization portion.

The solvent supply step S15 is a step of supplying the dehydrating agent (for example, organic solvent) that is the treatment liquid distilled, separated, and collected in the distillation step S14b to the dehydration and washing step S12. The solvent supply device 15 for performing the solvent supply step S15 is not particularly limited as long as it can transfer the treatment liquid from the distillation device 14b to the dehydration and washing device 12. An example of such a device is a liquid delivery pump.

When the dehydrating agent (for example, organic solvent), which is the treatment liquid, is collected in the drying step S14a, the solvent supply step S15 may also be a step of supplying the collected dehydrating agent to the dehydration and washing step S12.

Though not illustrated, waste generated during the treatment of the used absorbent article in the recycling facility 1 may be supplied to the incineration device 21 of the incineration facility 2 for incineration. As a result, in the recycling facility 1, the waste disposal treatment steps and waste disposal treatment equipment can be reduced, and in the incineration facility 2, combustion gas for the power generation device 23 and raw materials for methane fermentation can be secured.

Next, step S2 of the recycling method, which is performed in the incineration facility 2, will be described. Step S2 comprises a treatment liquid utilization step S24. Step S2 may further comprise at least one of a cooling step S21, a gas treatment step S22, and an odor treatment step S23. Step S2 may further comprise a waste heat supply step (not illustrated). These steps are not performed sequentially, but are performed as needed.

The incineration facility 2 comprises the incineration device 21 (incineration portion) for incinerating waste. The incineration facility 2 may further comprise at least one of the methane fermentation device 22 (methane fermentation portion) for producing methane gas through methane fermentation using organic substances in the waste, and the power generation device 23 (power generation portion) for generating electricity using high-temperature exhaust gas from the incineration device 21 and/or methane gas from the methane fermentation device 22.

The cooling step S21, the gas treatment step S22, the odor treatment step S23, and the treatment liquid utilization step S24 of step S2 are performed by the incineration device 21, the incineration device 21, the incineration device 21 and the methane fermentation device 22, and the incineration device 21 and the methane fermentation device 22 of the incineration facility 2, respectively. Each step will be described in detail below. When step S2 comprises a waste heat supply step (not illustrated), this step is performed by the incineration device 21 and the methane fermentation device 22.

The cooling step S21 is a step of using cooling water to cool a part of the incineration device 21, the methane fermentation device 22, the power generation device 23, or any peripheral equipment of these devices which require cooling. Cooling is performed, for example, by circulating cooling water through predetermined cooling piping or by injecting cooling water or air into the parts that require cooling. In the cooling step S21, as described above, a pretreatment liquid (acidic aqueous solution, polyvalent metal salt aqueous solution), alkaline aqueous solution, or acidic aqueous solution can be used as the cooling water.

In the gas treatment step S22, when ozone-containing gas has been used in the dehydration and washing step S12, the ozone-containing gas is treated in the incineration facility 2. For example, when the incineration device 21 incinerates waste, the ozone-containing gas is supplied to the incineration device 21, where it is decomposed by heat into oxygen, which contributes to the combustion of the waste.

Furthermore, in the gas treatment step S22, the ozone-containing gas may be supplied to, for example, the methane fermentation device 22 (not illustrated) in the incineration facility 2. In this case, if the ozone-containing gas is passed through a biomass resource serving as a raw material for methane fermentation in advance to decompose and solubilize the organic substances constituting the biomass resource, methane fermentation of the biomass resource can be promoted and the yield of methane gas can be increased.

The odor treatment step S23 is a step in which the gas comprising various components (for example, odors) generated in the dehydration and washing step S12 and the separation step S13 is treated in the incineration facility 2. The gas comprising various components is supplied to, for example, the incineration device 21 in which waste is being combusted, and is thermally decomposed and rendered harmless (for example, deodorized), or is subjected to methane fermentation in the methane fermentation device 22.

The treatment liquid utilization step S24 is a step of treating, in the incineration device 21 or the methane fermentation device 22, the treatment liquid that is a solution comprising contaminants and other materials generated in the distillation step S14b (or separation step S13). Contaminants in the treatment liquid, such as various organic substances such as excrement, sebum, and other materials, are incinerated in the incineration device 21 or are subjected to methane fermentation in the methane fermentation device 22 within the incineration facility 2.

The waste heat supply step (not illustrated) is a step of supplying a part of the waste heat generated by the incineration facility 2 (for example, the incineration device 21, the methane fermentation device 22, the power generation device 23) to the recycling facility 1. Heat supply is performed using a known liquid or gas heat transfer medium (which may belong to either the incineration facility 2 or the recycling facility 1).

The power generation device 23 generates electricity using high-temperature exhaust gas generated by the incineration device 21 combusting waste etc., and/or methane gas produced by methane fermentation in the methane fermentation device 22. The generated electricity may cover part or all of the electricity required by the equipment in the incineration facility 2 (for example, the incineration device 21, the methane fermentation device 22, and the power generation device 23), or may cover part or all of the electricity required by the equipment of the recycling facility 1 (for example, the crushing device 10, the pretreatment device 11, the dehydration and washing device 12, the separation device 13, the drying device 14a, the distillation device 14b, and the solvent supply device 15).

In this manner, in the present recycling method, by effectively utilizing, in the incineration facility 2, a part of waste (such as waste liquid and exhaust gas), such as the used treatment liquid (which may comprise excrement), generated in the separation step S13 of recycling facility 1, waste disposal treatment steps and equipment required by the recycling facility 1 can be reduced. In addition, by effectively utilizing, in the waste heat utilization step S14 (for example, the drying step S14a, the distillation step S14b) of the recycling facility 1, a part of the waste heat generated by the incineration facility 2, at least a part of the thermal energy required by the recycling facility 1 can be covered, whereby the thermal energy supply steps and equipment can be reduced. As a result, the present recycling method enables further increases in treatment efficiency in both the recycling facility 1 and the incineration facility 2.

In the present recycling method, as a preferred aspect, the treatment liquid comprises not only a dehydrating agent but also an oxidizing agent. Thus, by effectively utilizing, in the incineration facility 2, the used treatment liquid comprising the dehydrating and oxidizing agents generated by the recycling facility 1, the steps and equipment required for the disposal treatment of the dehydrating and oxidizing agents in the recycling facility 1 can be reduced. In addition, by effectively utilizing, in the recycling facility 1, a part of the waste heat, etc., generated by the utilization of the used dehydrating and oxidizing agents in the incineration facility 2, a part of the thermal energy required by the recycling facility 1 can be covered, whereby the thermal energy supply steps and equipment can be reduced. As a result, the present recycling method enables further increases in the treatment efficiency of both recycling facility 1 and incineration facility 2.

In the present recycling method, as a preferred aspect, an organic solvent is included as the dehydrating agent. The used organic solvent, which is one of the waste products generated in the separation step S13, is distilled in the distillation step S14b using a part of the waste heat from the incineration facility 2, and is then supplied to the dehydration and washing step S12 in the solvent supply step S15 for reuse. In this manner, using the organic solvent as part or all of the treatment liquid, treating used absorbent articles with the organic solvent in an appropriate location, and distilling and reusing the used organic solvent can reduce the amount of waste liquid (treatment liquid) discharged in the steps in recycling facility 1 (as compared to treatment of used absorbent articles with an aqueous solution). When the amount of waste liquid is large, it may not be possible to completely treat the waste liquid in the incineration facility 2, necessitating a waste liquid disposal treatment step. However, as described above, the present recycling method produces a small amount of waste liquid. As a result, the organic solvent disposal treatment steps and equipment required by the recycling facility 1 can be reduced, whereby the amount of organic solvent used can be reduced. In addition, at least a part of the thermal energy required for the distillation step S14b in the recycling facility 1 can be covered by waste heat, whereby the thermal energy supply steps and equipment can be reduced. As a result, the treatment efficiency of both the recycling facility 1 and the incineration facility 2 can be improved in the present recycling method.

In the present recycling method, as a preferred aspect, in the pretreatment step S11, the used absorbent article is dehydrated using the pretreatment liquid, reducing the dehydration burden in the dehydration and washing step S12, and the used pretreatment liquid, which is one of the waste products generated in the pretreatment step S11, is used in the cooling step S21 as cooling water for the incineration facility 2. As a result, the steps and equipment required for disposal treatment of the pretreatment liquid by the recycling facility 1 can be reduced. In addition, at least a part of the cooling water required by the incineration facility 2 can be covered by the pretreatment liquid, reducing the steps and equipment required for cooling the cooling water. As a result, the treatment efficiency of both the recycling facility 1 and the incineration facility 2 can be increased in the present recycling method.

In the present recycling method, as a preferred aspect, the treatment liquid comprises an ozone-containing gas as the oxidizing agent. In the dehydration and washing step S12, the used absorbent article is dehydrated and washed with the treatment liquid comprising the ozone-containing gas to make it easier to utilize the excrement in the incineration facility, and the used ozone-containing gas, which is one of the waste products generated in the dehydration and washing step S12, is treated in the incineration facility 2. As a result, the steps and equipment required for the disposal treatment of the used ozone-containing gas by the recycling facility 1 can be reduced. In addition, combustion in the incineration facility 2 can be assisted by the oxygen generated by the decomposition of ozone. As a result, the present recycling method enables further increases in the treatment efficiency of both recycling facility 1 and incineration facility 2.

In the present recycling method, as a preferable aspect, odors, which are one of the waste products generated in the dehydration and washing step S12, are treated in the incineration facility 2. As a result, the odor disposal treatment steps and equipment required by the recycling facility 1 can be reduced. As a result, the present recycling method enables further increases in the treatment efficiency of both recycling facility 1 and incineration facility 2.

In the present recycling method, as a preferred aspect, at least a part of the thermal energy required for drying the constituent members in drying the step S14a can be covered by a part of the waste heat from the incineration facility 2, whereby the supply steps and equipment for the thermal energy used for drying can be reduced. As a result, the present recycling method enables further increases in the treatment efficiency of both recycling facility 1 and incineration facility 2.

Thus, in the present recycling, as a preferred aspect, a dehydrating agent and an oxidizing agent are simultaneously used in the dehydration and washing step S12 to simultaneously dehydrate and wash at least each of the superabsorbent polymer having an acid group and the pulp fiber. Therefore, first, the dehydrating agent can remove the moisture which has been absorbed by each of the superabsorbent polymer and the pulp fiber and which may contain contaminants. Simultaneously, the oxidizing agent can reduce the contaminants contained in each of the superabsorbent polymer and the pulp fiber (for example, excrement, sebum, bacteria, odorous substances, colored substances derived therefrom, machine oil from production equipment, various organic substances, etc.). As a result, contaminants in at least each of the superabsorbent polymer and the pulp fiber can be reduced. Furthermore, by simultaneously performing dehydration and washing to suppress an increase in the number of steps, increases in cost associated with these treatments can be suppressed. Therefore, in the method of collecting a constituent member of a used absorbent article, contaminants in the constituent member can be reduced while suppressing increases in cost.

### (Second Embodiment)

Next, a recycling system comprising a resource conversion treatment facility and a recycling facility for used absorbent articles and a recycling method using the system according to the present embodiment will be described. In the present embodiment, a description will be given using a methane fermentation facility for biomass resources as an example of the resource conversion treatment facility. Differences from the first embodiment will be primarily described below.

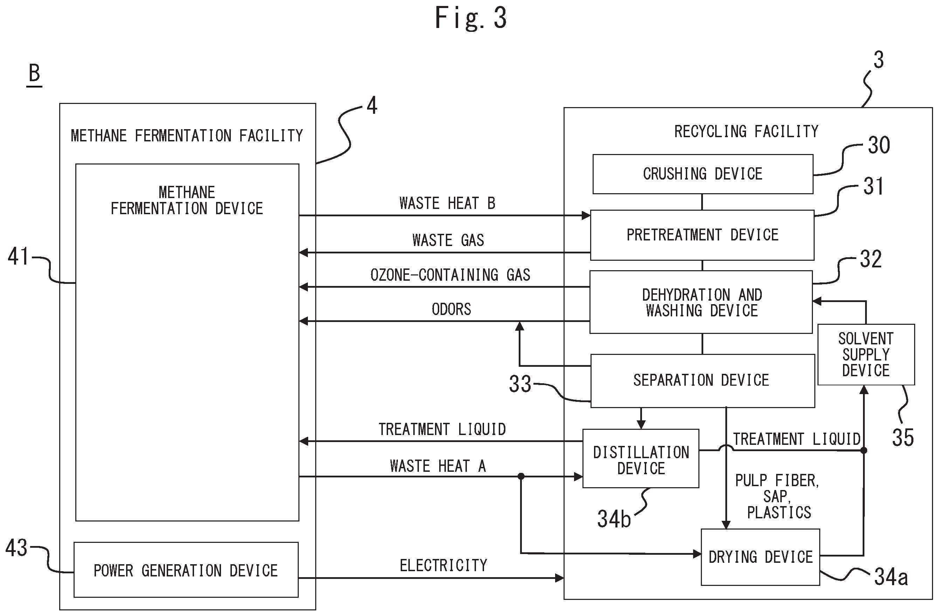

FIG. 3 is a block diagram showing an example of the configuration of a recycling system B according to the present embodiment. The recycling system B comprises a recycling facility 3 for used absorbent articles and a methane fermentation facility 4 (resource conversion treatment facility). The recycling facility 3 and the methane fermentation facility 4 may be integrated, adjacent, or co-located. Both facilities may be located on the same site or on separate sites. The recycling facility 3 is substantially the same as the recycling facility 1. The methane fermentation facility 4 is a facility that uses biomass resources to perform methane fermentation using microorganisms (for example, methanogens, which are anaerobic bacteria) to produce methane gas and other substances, wherein the facility may be a standalone facility or may be combined with another facility, such as a garbage treatment facility at a garbage incineration plant or a sewage treatment facility at a sewage treatment plant. The methane fermentation facility 4 may also comprise a device (for example, a power generation device) for utilizing the thermal energy generated by methane fermentation. By treating, in the methane fermentation facility 4, the waste (for example, waste liquid and exhaust gas) generated by the recycling facility 3 and utilizing, in the recycling facility 3, the energy (for example, heat and electricity) generated by the methane fermentation facility 4, treatment efficiency of both facilities can be further increased.

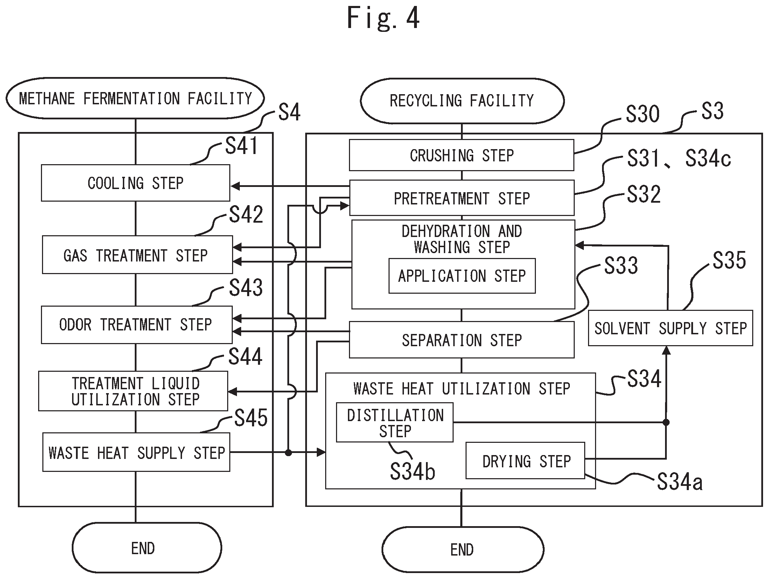

FIG. 4 is a flow diagram showing an example of the recycling method using the recycling system B according to the present embodiment. The recycling method comprises step S3 of treating the used absorbent article, which is performed in the recycling facility 3, and step S4 of performing methane fermentation-related treatment, which is performed in the methane fermentation facility 4. Step S3 is substantially the same as step S1. Step S4 is a step in which methane gas is produced by microbial methane fermentation using biomass resources, and may comprise a step of utilizing the generated thermal energy. By treating, in step S4, the waste generated in step S3 and utilizing, in step S3, the energy (for example, heat, electricity) generated in step S4, treatment efficiency of both facilities can be further increased.

The recycling system B and the recycling method using the same will be described below.

First, step S3, which is performed in the recycling facility 3 of the recycling method, will be described. Step S3 is substantially the same as step S1. The crushing step S30 to the solvent supply step S35 of step S3 are substantially the same as the crushing step S10 to the solvent supply step S15 of step S1, respectively. However, the contents of the pretreatment step S31 (S34c) differ from those of the pretreatment step S11. The pretreatment step S31 (S34c) will be described later.

The recycling facility 3 is substantially the same as the recycling facility 1. The crushing device 30 to the solvent supply device 35 of the recycling facility 3 are substantially the same as the crushing device 10 to the solvent supply device 15, respectively. However, the pretreatment device 31 differs from the pretreatment device 11. The pretreatment device 31 will be described later.

The crushing step S30 to the solvent supply step S35 are performed by the crushing device 30 to the solvent supply device 35, respectively.

The pretreatment step S31 is substantially the same as the pretreatment step S11 in that it is a step of dehydrating the used absorbent article, but differs from the pretreatment step S11 in the specific pretreatment method. Specifically, in the pretreatment step S31, the moisture absorbed by the used absorbent article (and in particular, the superabsorbent polymer) is reduced by heating and evaporation. At that time, the heat source for heating the moisture may be heat produced by the pretreatment device 11 itself, or another heat source, such as a part of the waste heat from the methane fermentation facility 4, may be used. An example of waste heat from the methane fermentation facility 4 is waste heat B generated by the methane fermentation device 41 (which will be described later). When a part of the waste heat from the methane fermentation facility 4 is used, the pretreatment step S31 can also be referred to as a waste heat utilization step S34c.

The specific configuration of the pretreatment device 31 for performing the heat treatment is not particularly limited as long as it can heat the superabsorbent polymer. For example, the pretreatment device 31 can be a thermostatic bath in which a used absorbent article comprising the superabsorbent polymer (or a crushed version thereof) can be placed and heated.

When heating has been performed as the pretreatment step S31, a part or all of the exhaust gas, such as water vapor, generated by heating may be supplied to the methane fermentation facility 4. In this case, the exhaust gas supplied to the methane fermentation facility 4 may be used, for example, in the methane fermentation device 41 or the power generation device 43 within the methane fermentation facility 4. In the methane fermentation device 41, for example, the exhaust gas may be used as moisture for adjusting the moisture amount during methane fermentation, and in the power generation device 43, the exhaust gas may be used as cooling water for the device. As a result, in the recycling facility 3, the exhaust gas treatment steps and equipment can be reduced, and in the methane fermentation facility 4, the amount of new moisture supplied can be reduced.

The device for supplying a part or all of the exhaust gas (water vapor, etc.) from the pretreatment step S11 to the methane fermentation facility 4 can be referred to as an exhaust gas supply device (exhaust gas supply portion: not illustrated). An example of such a device is a gas pump (not illustrated) attached to the pretreatment device 31.

Next, step S4, which is performed in the methane fermentation facility 4 of the recycling method, will be described. Step S4 is substantially the same as step S2, except that each step is performed in the methane fermentation device 41, the power generation device 43, or any peripheral equipment of these devices in the methane fermentation facility 4. The cooling step S41 to the treatment liquid utilization step S44 and the waste heat supply step S45 of step S4 are substantially the same as the cooling step S21 to the treatment liquid utilization step S24 and the waste heat supply step (not illustrated) of step S2.

The cooling step S41 is a step of cooling with cooling water a part of the methane fermentation device 41, the power generation device 43, or any peripheral equipment of these devices that requires cooling. Cooling is performed, for example, by circulating cooling water through predetermined cooling piping, or by injecting cooling water or air into the parts that require cooling. In the cooling step S41, as described above, exhaust gas (cooled during transport) such as the water vapor used in the pretreatment step S31 can be used as the cooling water.

The gas treatment step S42 is a step in which exhaust gas such as the water vapor used in the pretreatment step S31, or the ozone-containing gas when the ozone-containing gas is used in the dehydration and washing step S32, is treated (used) in the methane fermentation facility 4. Water vapor may be used, for example, as moisture to adjust the amount of moisture during methane fermentation. For example, when the methane fermentation device 41 performs methane fermentation, when the ozone-containing gas is used to decompose and solubilize organic substances in the biomass resource in advance, methane fermentation of the biomass resource can be promoted and the yield of methane gas can be increased.

The odor treatment step S43 is a step of treating, in the methane fermentation facility 4, the gas comprising various components (for example, odors) generated in the dehydration and washing step S32 and the separation step S33. The gas comprising various components is supplied to, for example, the methane fermentation device 41 in which methane fermentation is being performed, and is used for methane fermentation or is rendered harmless (for example, deodorized).

The treatment liquid utilization step S44 is a step in which the treatment liquid that is a solution comprising contaminants and other materials produced in distillation step S34b (and separation step S33) is treated in the methane fermentation facility 4. Contaminants in the treatment liquid, such as excrement, sebum, and various organic substances, are supplied to, for example, the methane fermentation device 41 in which methane fermentation is being performed, and are used for methane fermentation or are rendered harmless (for example, deodorized).

The waste heat supply step S45 is a step in which a part of the waste heat generated by the methane fermentation facility 4 (for example, a methane fermentation device 41, a power generation device 43) is supplied to the recycling facility 1. The heat is supplied using a known liquid or gas heat transfer medium (which may belong to either the incineration facility 2 or the recycling facility 1).

The power generation device 43 generates electricity using the methane gas produced by methane fermentation in the methane fermentation device 41. The generated electricity may cover part or all of the electricity required by the equipment in the methane fermentation facility 4 (for example, the methane fermentation device 41 and the power generation device 43), or may cover part or all of the electricity required by the equipment in the recycling facility 3 (for example, the crushing device 30, the pretreatment device 31 (34c), the dehydration and washing device 32, the separation device 33, the drying device 34a, the distillation device 34b, and the solvent supply device 35).

In the present recycling method, before the dehydration and washing step S32, the moisture absorbed by the used absorbent article is reduced, i.e., removed, by heating and evaporation (pretreatment step S31). As a result, the dehydration burden in the dehydration and washing step S32 can be reduced. Furthermore, at that time, a part of the waste heat from the resource conversion treatment facility is used to heat the moisture (waste heat utilization step S34 (34c)). As a result, at least a part of the thermal energy required for the pretreatment step S31 in the recycling facility 3 can be covered by waste heat, whereby the thermal energy supply steps and equipment can be reduced. Therefore, the present recycling method enables further increases in treatment efficiency of both the recycling facility 3 and the methane fermentation facility 4.

In the present recycling method, in the methane fermentation facility 4, the treatment liquid utilization step S44 comprises a methane fermentation step in which methane fermentation is performed using the excrement included in a part of the treatment liquid separated in the separation step S33 of the recycling facility 3. As a result, at least part of the biomass resources required by the methane fermentation facility 4 can be covered by the excrement, whereby the biomass resources supply steps and equipment can be reduced. Therefore, the present recycling method enables further increases in the treatment efficiency of both the recycling facility 3 and the methane fermentation facility 4.

In the present recycling method, a part of the waste heat generated by the methane fermentation facility 4 that is to be used in the waste heat utilization step S34 of the recycling facility 3 includes the waste heat generated in the methane fermentation step of the methane fermentation facility 4. As a result, the thermal energy supply steps and equipment required in the waste heat utilization step S34 of the recycling facility 3 can be reduced. Thus, the present recycling method enables further increases in the treatment efficiency of both the recycling facility 3 and the methane fermentation facility 4.

In this manner, the present recycling method in the present embodiment can also achieve the same effects as in the first embodiment.

The recycling method and recycling system of the present invention are not limited to the above-described embodiments, and appropriate combinations and modifications are possible within the scope of the spirit and intent of the present invention. Note that in the present description, ordinal numbers such as "first" and "second" are used to distinguish items to which the ordinal numbers are assigned, and do not indicate the order, priority, importance, etc., of each item.

### DESCRIPTION OF REFERENCE SIGNS

- 2: incineration facility
- 1: recycling facility
- A: recycling system
- S12: dehydration and washing step
- S13: separation step
- S24: treatment liquid utilization step
- S14: waste heat utilization step

## Claims

1. A recycling method of used absorbent articles using a recycling system comprising a resource conversion treatment facility and a recycling facility for used absorbent articles, the method comprising:
in the recycling facility, a dehydration and washing step of dehydrating and washing a used absorbent article with a treatment liquid comprising a dehydrating agent,
in the recycling facility, a separation step of separating a constituent member of the used absorbent article from the treatment liquid,
in the resource conversion treatment facility, a treatment liquid utilization step of utilizing a part of the treatment liquid separated in the separation step, and
in the recycling facility, a waste heat utilization step of utilizing a part of waste heat generated by the resource conversion treatment facility.

2. The recycling method according to claim 1, wherein the treatment liquid further comprises an oxidizing agent.

3. The recycling method according to claim 1 or 2, wherein the treatment liquid in the dehydration and washing step comprises an organic solvent as the dehydrating agent,
the waste heat utilization step comprises a distillation step of using a part of the waste heat from the resource conversion treatment facility in distillation of the organic solvent included in the treatment liquid separated in the separation step, and
the recycling method further comprises a solvent supply step of supplying the organic solvent distilled in the distillation step to the dehydration and washing step.

4. The recycling method according to claim 1 or 2, further comprising:
in the recycling facility, before the dehydration and washing step, a pretreatment step of reducing moisture absorbed by the used absorbent article with a pretreatment liquid, and
in the resource conversion treatment facility, a cooling step of using the pretreatment liquid used in the pretreatment step, as cooling water.

5. The recycling method according to claim 1 or 2, further comprising:
in the recycling facility, before the dehydration and washing step, a pretreatment step of reducing moisture absorbed by the used absorbent article by heating and evaporation, wherein
the pretreatment step comprises a step of using a part of the waste heat from the resource conversion treatment facility to heat the moisture, as the waste heat utilization step.

6. The recycling method according to claim 1 or 2, wherein the treatment liquid utilization step comprises a methane fermentation step of performing methane fermentation using excrement included in a part of the treatment liquid separated in the separation step.

7. The recycling method according to claim 6, wherein in the waste heat utilization step, waste heat generated in the methane fermentation step is included as part of the waste heat generated by the resource conversion treatment facility.

8. The recycling method according to claim 2, wherein the dehydration and washing step comprises an application step of applying an ozone-containing gas as the oxidizing agent to the treatment liquid, and
the recycling method further comprises a gas treatment step of treating, in the resource conversion treatment facility, the ozone-containing gas used in the dehydration and washing step.

9. The recycling method according to claim 1 or 2, further comprising, in the resource conversion treatment facility, an odor treatment step of treating, in the resource conversion treatment facility, odor generated in the dehydration and washing step.

10. The recycling method according to claim 1 or 2, wherein the waste heat utilization step comprises a drying step of using a part of the waste heat from the resource conversion treatment facility to dry the constituent member separated in the separation step.

11. A recycling method of used absorbent articles using a recycling facility for used absorbent articles, the method comprising:
a dehydration and washing step of dehydrating and washing a used absorbent article with a treatment liquid comprising a dehydrating agent,
a separation step of separating a constituent member of the used absorbent article from the treatment liquid,
a treatment liquid supply step of supplying a part of the treatment liquid separated in the separation step to a combustible waste resource conversion treatment facility, and
a waste heat utilization step of utilizing, in the recycling facility, a part of waste heat generated by the resource conversion treatment facility.

12. A recycling system comprising a resource conversion treatment facility and a recycling facility for used absorbent articles, wherein
the recycling facility comprises:
a dehydration and washing portion of dehydrating and washing a used absorbent article with a treatment liquid comprising a dehydrating agent, and
a separation portion of separating a constituent member of the used absorbent article from the treatment liquid,
the resource conversion treatment facility comprises a treatment liquid utilization portion of utilizing a part of the treatment liquid separated by the separation portion, and
the recycling facility comprises a waste heat utilization portion of utilizing a part of waste heat generated by the resource conversion treatment facility.

13. A recycling system comprising a recycling facility for used absorbent articles, wherein
the recycling facility comprises:
a dehydration and washing portion of dehydrating and washing a used absorbent article with a treatment liquid comprising a dehydrating agent,
a separation portion of separating a constituent member of the used absorbent article from the treatment liquid,
a treatment liquid supply portion of supplying a part of the treatment liquid separated by the separation portion to a combustible waste resource conversion treatment facility, and
a waste heat utilization portion of utilizing, in the recycling facility, a part of waste heat generated by the resource conversion treatment facility.
